(19) Europäisches Patentamt
European Patent Office
Office européen des brevets

(11) **EP 4 224 378 A1**

(12) **EUROPEAN PATENT APPLICATION**

(43) Date of publication:
**09.08.2023 Bulletin 2023/32**

(21) Application number: **22155513.9**

(22) Date of filing: **07.02.2022**

(51) International Patent Classification (IPC):
**G06N 10/60** $^{(2022.01)}$ **G06N 3/04** $^{(2023.01)}$

(52) Cooperative Patent Classification (CPC):
**G06N 10/60;** G06N 3/045; G06N 3/0475

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Qu&CO R&D B.V.**
**1071 LE Amsterdam (NL)**

(72) Inventors:
• **Elfving, Vincent**
**1071 LE Amsterdam (NL)**
• **Kyriienko, Oleksandr**
**1071 LE Amsterdam (NL)**

(74) Representative: **De Vries & Metman**
**Overschiestraat 180**
**1062 XK Amsterdam (NL)**

Remarks:
Claims 16-19 are deemed to be abandoned due to non-payment of the claims fees (Rule 45(3) EPC).

(54) **DIFFERENTIABLE GENERATIVE MODELLING USING A HYBRID COMPUTER INCLUDING A QUANTUM PROCESSOR**

(57) We propose an approach for learning probability distributions as differentiable quantum circuits (DQC) that enable efficient quantum generative modelling (QGM) and synthetic data generation. Contrary to existing QGM approaches, we perform training of a DQC-based model, where data is encoded in a latent space with a phase feature map, followed by a variational quantum circuit. We then map the trained model to the bit basis using a fixed unitary transformation, coinciding with a quantum Fourier transform circuit in the simplest case. This allows fast sampling from parametrized distributions using a single-shot readout. Importantly, simplified latent space training provides models that are automatically differentiable, and we show how samples from propagated stochastic differential equations (SDEs) can be accessed by solving a stationary Fokker-Planck equation and time-dependent Kolmogorov backward equation on a quantum computer. Finally, our approach opens a route to multidimensional generative modelling with qubit registers explicitly correlated via a (fixed) entangling layer. In this case quantum computers can offer advantage as efficient samplers, which perform complex inverse transform sampling enabled by fundamental laws of quantum mechanics. We envisage that a specific hardware with fast (optical) readout for sampling will provide an edge over existing quantum solutions. On a technical side the advances are multiple, as we introduced the phase feature map, analyzed its properties, and developed frequency-taming techniques that include qubit-wise training and feature map sparsification.

Fig. 7

**Description**

**Technical field**

The disclosure relates to quantum generative modelling, in particular, though not exclusively, to methods and systems for differentiable generative modelling using a quantum a hybrid computer including a quantum processor and computer program products for such hybrid computers.

**Background**

Quantum computers are well-suited for quantum chemistry applications, as they are naturally suitable for the simulation of certain quantum processes. At the same time, quantum computers are not directly suited for all computational problems, and can be seen as specialized machines (akin to GPUs), that need to be tailored to the problem at hand. Designing these machines and their operational schedule is crucial for solving problems in quantum computers faster than any available classical methods. This remains true for tasks and applications in differential calculus.

In principle, the information content of a N-qubit register can be described by 2^N classical complex numbers. A 'quantum circuit' is a set of instructions sent by a classical computer to a quantum computer to execute certain 'gate operations' or 'unitaries', which in practice involve a sequence of operations on the quantum system such as microwave or optical pulses.

In general, compressing $2^N$-dimensional data into an $N$-qubit register is beneficial due to exponential memory savings. However, several problems arise. First, creating an exponentially compressed state from a vector of constants is a serious problem, that requires sophisticated techniques like quantum random access memory (QRAM) and may require exponentially many gate operations for preparing a general state, resulting in an exponential scaling of the algorithmic runtime.

Current quantum devices are prone to noise and are not suited for large depth quantum circuits. However, the Hilbert space of these devices increases exponentially with the number of qubits, providing advantage over classical methods for certain problems. Quantum processors with about -100 qubits may offer computational power inaccessible to classical computers. This corresponds to Noisy Intermediate Scale Quantum (NISQ) processors, that are special purpose devices that need to be co-designed with a problem in mind.

A particularly useful approach in this setting is to use variational quantum algorithms (VQA). Initially proposed for chemistry under the name of variational quantum eigensolver (VQE), this approach queries a quantum computer to prepare low energy states on a quantum devices, but guiding the optimization loops using a classical computer. This strategy has allowed to perform quantum calculations with relatively noisy devices, allowing for numerous advances, unmatched by current large-depth protocols. This has triggered the attention to generic VQA's, finding applications in many application areas including data science, quantum simulation and more recently also in quantum generative modelling.

Quantum generative modelling (QGM) aims to exploit trainable circuits that can prepare distributions as quantum states. Being a subject of emerging quantum machine learning (QML), QGM utilizes the Born rule inherent to quantum mechanics. The goal is to represent a parametrized probability distribution $p_\theta(x)$ as a probability to measure a bit string $x$ from a variational state parametrized by a vector gate parameters $\theta$. By using so-called quantum circuit Born machines (QCBMs) models can be learned *directly* from samples of a target distribution using various loss functions. Here, directly means that a sample can be determined directly from a measured wavefunction, so that for one sample in principle only one quantum measurement is needed. Another approach is based on so-called quantum generative adversarial networks (QGANs), where a training schedule corresponds to the minimax game.

While making a step towards sampling-based advantage on quantum computers, current QGM performance is largely limited. First, QCBM and QGAN-based distribution generators are difficult to train as they require matching $O(2^N)$ amplitudes for N-qubit registers and finding corresponding state for some vector $\theta$. Second, the QCBM architecture is not automatically differentiable with respect to variable x, and QGAN differentiation leads to an ill-defined loss landscape. Thus, currently QML has limited application for applications such as solving stochastic differential equations (SDE). More generally, current quantum algorithmic solutions to generative modelling, current methods rely on computationally-expensive amplitude encoding schemes, complex or deep quantum circuits, or other incompatibilities with realistic NISQ hardware devices available today and in the expected near future.

Hence, from the above, it follows that there is therefore a need in the art for improved methods and systems for generative modelling using quantum computers. In particular, there is a need in the art for improved methods and systems for training differentiable generative models and to generate sets of samples from such models, as well as providing a framework that is compatible with near-term quantum hardware with limited circuit depth, as well as extensibility to fault-tolerant hardware.

Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

This disclosure relates to methods and systems for learning probability distributions as differentiable quantum circuits (DQC) that enable efficient quantum generative modelling (QGM) and synthetic data generation. Contrary to existing QGM approaches, the methods in this disclosure perform training of a DQC-based model, where data is encoded in a latent space with a phase feature map, followed by a variational quantum circuit. The trained model is then mapped to a bit basis using a fixed unitary transformation. In the simplest case, this may coincide with a quantum Fourier transform circuit. This allows fast sampling from parametrized probability distributions using a singleshot readout.

Simplified latent space training may provide models that are automatically differentiable. Moreover, samples from propagated stochastic differential equations (SDEs) can be accessed by solving a stationary Fokker-Planck equation and time-dependent Kolmogorov backward equation on a quantum computer. Finally, this approach opens a route to multidimensional generative modelling with qubit registers explicitly correlated via a (fixed) entangling layer. In this case, quantum computers can offer advantages as efficient samplers, which can perform complex inverse transform sampling enabled by fundamental laws of quantum mechanics. Thus, specific hardware with fast (optical) readout for sampling can provide an edge over existing quantum solutions. This disclosure also introduces a phase feature map, analyses its properties, and describes a frequency-taming techniques that include qubit-wise training and feature map sparsification.

A method for efficiently training a differentiable quantum generative model, referred to as DQGM, is described. This method separating training and sampling stages. Consequently, circuits may be trained in the latent space as a feature map encoded differentiable circuit, while the optimized circuit may be sampled with an additional (fixed) basis transformation. The method may use a phase feature map. The method may further use frequency-taming techniques that include qubit-wise training and feature map sparsification. As is shown by a benchmark against QCBM, using numerical simulations, samples from propagated stochastic differential equations can be accessed by solving a Fokker-Planck equation on a quantum computer. Embodiments of the method also allow multidimensional generative modelling with qubit registers explicitly correlated via a (fixed) entangling layer. In this case, quantum computers can offer advantage over classical implementations as efficient samplers, which perform complex inverse transform sampling enabled by fundamental laws of quantum mechanics.

It is an objective of the embodiments in this disclosure to reduce or eliminate at least part of the drawbacks known in the prior art. In particular.

In an aspect, the invention may relate to a method for solving a stochastic differential equation, SDE, using a hybrid data processing system comprising a classical computer and a special purpose processor.

In an embodiment, the method may include receiving by the classical computer a partial differential equation, PDE, the PDE describing dynamics of a quantile function QF associated a stochastic differential equation SDE, preferably the partial differential equation defining a quantilized Fokker-Planck QFP equation, the SDE defining a stochastic process as a function of time and one or more further variables and the QF defining a modelled distribution of the stochastic process; executing by the classical computer a first training process for training one or more neural networks to model an initial quantile function, the one or more neural networks being trained by the special purpose processor based on training data, the training data including measurements of the stochastic process; executing by the classical computer a second training process wherein the one or more neural networks that are trained by the first training process are further trained by the special purpose processor based on the QFP equation for one or more time intervals to model the time evolution of the initial quantile function; and, executing by the classical computer a sampling process based on the quantile functions for the one or more time intervals, the sampling process including generating samples of the stochastic process using the quantile function, the generated samples representing solutions of the SDE.

Thus, the invention to generate sets of samples that form solutions to a timeevolution of a stochastic differential equation, SDE. The samples may be generated based on quantile functions (QFs) and derivatives thereof that is associated with the SDE. To that end, the SDE may be rewritten as a set of differential equations for the quantile function. Further, a neural network representation of the QF and its derivatives may be determined, which can be used to generate samples that form solutions of the SDE. The neural network representation may be a classical neural network or a quantum neural network. Feature maps and differentiable quantum circuits (DQCs) may be used to directly represent the quantile function of the probability distribution for underlying SDE, and propagate them in time by solving the differential equations of quantile mechanics.

In an embodiment, the special purpose processor may be a quantum processor configured to execute operations associated with one or more quantum neural networks QNNs. QNN allow a high-dimensional feature space, are suitable even for systems of high-correlations, may be used to create functions from many basis functions, are resistant to overfitting due to unitarity. QNN has potentially lower energy consumption than big NN depending on HW implementation, scales even better with dimensionality than PINN due to efficient parallel/serialization of feature maps, corresponding to very deep NN case. QNNs allow a quantum quantile mechanics (QQM) approach may be wherein quantum neural networks are used to model the quantile function associated with a SDE.

In an embodiment, the second training process may include receiving or determining, by the classical computer system, a formulation of quantum circuits representing the PDE describing the dynamics of a quantile function, preferably the quantum circuits being parameterized by at least one latent variable z associated with the SDE through its quantile functional description, and the quantum circuits including one or more function circuits for determining one or more trial functions values $f(z_j)$ around one more points $z_j$ and one or more differential function circuits for determining one or more trial derivative values, preferably one or more first order trail derivative and one or more second order trail derivatives, around the one or more points $z_j$.executing, by the quantum processor, the quantum circuits for a set of points $z_j$ in the variable space z of the PDE; receiving, by the classical computer system, in response to the execution of the quantum circuits quantum, hardware measurement data; and, determining, by the classical computer system, based on the quantum hardware measurement data and a loss function, if the quantum hardware measurement data forms a solution to the PDE.

In an embodiment, the second training process may include solving the PDE based on differentiable quantum circuits DQCs, the differentiable quantum circuits including a first feature map quantum circuit which is a function of a differentiable variable x of the PDE, a second feature map quantum circuit which is a function of a differentiable variable t of the PDE encoding the time evolution of the quantum circuit and a quantum circuit representing a variational ansatz.

In an embodiment, the determining if the quantum hardware measurement data forms a solution to the one or more DEs may be further based on one or more boundary conditions associated with the one or more DEs

In an embodiment, executing the quantum circuits may include: translating each of the quantum circuits into a sequence of signals and using the sequence of signals to operate qubits of the quantum computer; and/or, wherein receiving hardware measurement data includes: applying a read-out signal to qubits of the quantum computer and in response to the read-out signal measuring quantum hardware measurement data.

In an embodiment, the one or more quantum neural networks for modelling the quantile function may include gate-based qubit devices, optical qubit devices and/or gaussian boson sampling devices.

In an embodiment, during the first training process the one or more neural networks may be trained using a quantum generative adversarial network, qGAN, process, including a quantum generator neural network and a quantum discriminator neural network.

In an embodiment, random numbers may be generated by a classical computer which are fed into the one or more quantum neural networks that model the quantile functions for different time instances, for generate multiple sets of a samples wherein each set of samples has a distribution representing a solution to the SDE.

In an embodiment, random numbers may be generated by the quantum computer, preferably the random numbers being generated by the quantum neural network, the quantum GAN or QCBM setting.

In an embodiment, the special purpose processor is a GPU, TPU or FPGA based hardware processor configured to execute operations associated with one or more neural networks NNs.

In an embodiment, during the first training process the one or more neural networks are trained using a generative adversarial network, GAN, process, including a generator neural network and a discriminator neural network.

In an embodiment, the second training process may include solving the PDE based on one or more trained neural networks, preferably physics informed neural networks PINNs, the one or more trained neural networks being trained to model the quantile function and the derivative constraints on the quantile function as defined by the PDE for different time instances.

Thus, the invention allows determination a neural network-based NN-based sample generator representing the quantile function associated with the SDE. The NN-based sample generated may be implemented as a classical neural network, in particular a physics information neural network PINN or a quantum neural network QNN. PINNs are robust against curse of dimensionality, scales much better than FEM for solving PDEs in many cases. Moreover, PINNs provide more flexibility than Finite Element Methods, because the loss function description can include many more flexible details including data.

In an embodiment, random numbers may be generated by a classical computer which are fed into the trained one or more neural networks that model quantile functions for different time instances, to generate multiple sets of a samples wherein each set of samples has a distribution representing a solution to the SDE.

In an embodiment, the SDE may define a reverse-time SDE, or backward SDE, or forward SDE, or reverse-time backward SDE.

In an embodiment, the second order derivatives of the PDE may be computed using the parameter-shift rule, as described by equation 15 in this application.

In a further aspect, the invention may relate to a system for solving one or more stochastic differential equations, SDEs, using a hybrid data processing system comprising a classical computer system and a special purpose processor, wherein the system is configured to perform the steps of: receiving by the classical computer a partial differential equation, PDE, the PDE describing dynamics of a quantile function QF associated a stochastic differential equation SDE, preferably the partial differential equation defining a quantilized Fokker-Planck QFP equation, the SDE defining a stochastic process as a function of time and one or more further variables and the QF defining a modelled distribution of the stochastic process; executing by the classical computer a first training process for training one or more neural networks to model an initial quantile function, the one or more neural networks being trained by the special purpose processor based on training data, the training data including measurements of the stochastic process; executing by the classical computer a second training process wherein the one or more neural networks that are trained by the first training process are further trained by the special purpose processor based on the QFP equation for one or more time intervals to model the time evolution of the initial quantile function; and, executing by the classical computer a sampling process based on the quantile functions for the one or more time intervals, the sampling process including generating samples of the stochastic process using the quantile function, the generated samples representing solutions of the SDE.

In a further aspect, the invention may relate to a system for solving one or more stochastic differential equations, SDEs, using a hybrid data processing system comprising a classical computer system and a special purpose processor, wherein the system is configured to perform any of the steps as described above.

The systems and methods described in this application illustrate how to train a neural network as a QF based on data and/or a known model at an initial point of time, and find a time-propagated QF which can be used for high-quality sampling to obtain data sets that are solutions to the underlying SDE. When using quantum neural networks in the DQC form, the advantages of quantum-based learning may be exploited. Differential equations for quantile functions may be used for training differentiable quantum circuits. A quantum quantile learning protocol is described for inferring QF from data and use quantile quantum mechanics QQM to propagate the system in time. This provides a robust protocol for time series generation and sampling.

In an embodiment, the differential equation(s) include one or more (non-) linear stochastic differential equations, including but not limited to those of Ito and Stratonovich form.

An implementation of the method described on the basis of the embodiments in this application, implemented on noisy quantum hardware with finite logical gate error and finite coherence times

An implementation of the method on noisy quantum hardware wherein the subroutines of the algorithm may be executed by multiple quantum devices operating in parallel and/or in series, routing measurement data to one classical computer which computes the loss function value each iteration.

An implementation of the method described on the basis of the embodiments in this application, wherein instead of measuring a cost function for each part in the loss function as described, the embodiment relies on overlap estimations of lef-hand-side and right-hand-side of the differential equations in functional form, considering the quantum hardware quantum information overlap as functional overlap.

An implementation of the method described on the basis of the embodiments in this application, based on qubit-based quantum hardware, where the quantum information carriers are embodied by qubits or quantum bits.

An implementation of the method described on the basis of the embodiments in this application, where the quantum hardware consists of a continuous-variable system, such that information carriers are defined by continuous quantum variables

The invention may also relate to a computer program or suite of computer programs comprising at least one software code portion or a computer program product storing at least one software code portion, the software code portion, when run on a computer system, which may include a classical computer and a special purpose process, e.g. a quantum computer or a GPU, TPU or FPGA based special purpose processor for exacting neural networks that are used for representing quantile function associated with an SDE and to compute the time evolution of quantile functions based on an partial differential equation describing the dynamics of the quantile function.

The invention may also relate to a method and a system for training a generative model using a hybrid data processing system comprising a classical computer and a quantum processor, the method comprising: receiving by the classical computer a set of information about a stochastic process, including samples (data) and/or parametric analytical function or parametric (implicit) distribution function, preferably the distribution function defining a probability density function (PDF) in one or more dimensions, parametrized by a variable $x$ and, optionally, one or more further parameters, such as time; and, executing by the classical computer a training process for training a quantum neural network (QNN) to model a probability density function, the training data including measurements of the stochastic process and/or functional descriptions of the distribution, the QNN including a feature map for encoding a variable $x$ of the distribution function, a variational circuit associated with variational parameters, and a cost function for determining the output of the QNN.

The invention may further relate to a non-transitory computer-readable storage medium storing at least one software code portion, the software code portion, when executed or processed by a computer, is configured to perform any of the method steps as described above.

The invention will be further illustrated with reference to the attached drawings, which schematically will show embodiments according to the invention. It will be understood that the invention is not in any way restricted to these specific embodiments.

Brief description of the drawings

**Fig 1.** schematically describes a general data-driven generative modelling setting;
**Fig 2.** schematically describes a general data-driven generative modelling setting;
**Fig. 3** depicts a system for generative modelling using quantum computation according to an embodiment;
**Fig. 4** schematically depicts a QCBM depicts as an example of a quantum generative model;
**Fig. 5** schematically depicts a QGAN as a further example of a quantum generative model;
**Fig 6.** shows a schematic diagram of a DQGM workflow according to an embodiment;
**Fig. 7** schematically shows DQGM training and sampling according to an embodiment;
**Fig. 8** schematically shows frequency-taming techniques according to an embodiment;
**Fig. 9** schematically shows feature map sparsification according to an embodiment;
**Fig. 10A** and **10B** show a schematic of a variational feedback loop for a DGQM-based quantum algorithmic subroutine;
**Fig. 11A-C** are hardware-level schematics of quantum processors for executing qubit operations;
**Fig. 12** is a hardware-level schematics of the actions effectuating the logical operations shown in **Fig. 7;**
**Fig. 13** shows a schematic depiction of a quantum circuit used to represent a quantum copula as DQGM according to an embodiment;
**Fig. 14** shows numerical results comparing the DQGM and QCBM approaches to learn the normal distribution, with ;
**Fig. 15** shows numerical results of Fourier initialization of DQGM according to an embodiment;
**Fig. 16A** shows a specific form of a stochastic differential equation known as the Ornstein-Uhlenbeck process and
**Fig. 16B** shows numerical results comparing DQGM trained only on data and including differential constraints applied to the Ornstein-Uhlenbeck process;
**Fig. 17** shows numerical results of classical stochastic differential equation sampling using an Euler-Maruyama approach; and comparing to DQGM approach

Description of the embodiments

Quantum computing can offer a computational advantage by meticulous usage of an exponentially large Hilbert space for qubit registers. However, efficient solutions are only expected for some problem types. Thus, the use of quantum computing is currently limited to specific tasks that can exploit the specific advantages of quantum computing and that cannot be solved efficiently using classical computers. One example corresponds to sampling from quantum states created by random entangling circuits. This task lies at the heart of quantum supremacy experiments. While being computationally advantageous for producing random samples (just need to send a *'measure'* instruction), the sampled probability distributions are typically not suitable for industrially relevant applications. Finding a subset of problems of distributions which are both classically-intractable and (commercially) useful is an open challenge. One such subset of problems is generative modelling.

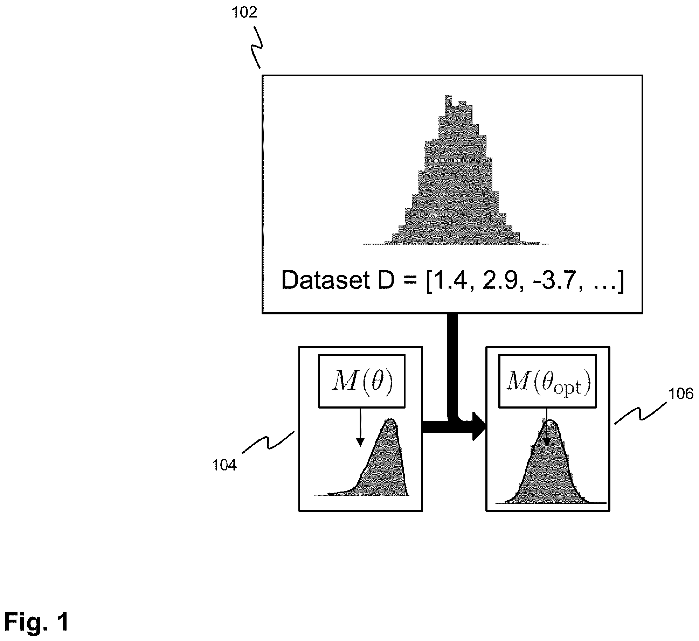

**Fig 1.** schematically describes a general (classical) data-driven generative modelling setting. Given a dataset D **102** of discrete or continuous-variable numbers or vectors, parameters $\theta$ of a model $M(\theta)$ **104** are variationally optimized to obtain an optimised model parameters $M(\theta_{opt})$ **106.** When the optimised model is a good representation of the dataset D, data sampled from the optimised model resemble the original distribution D underlying the input training data. The probability density function of this optimised model has approximately the same shape as the (normalized) histogram of the input dataset. For example, a Gaussian distribution will have a normal-distribution probability density function, and a histogram from its samples will have a normal-distribution shape.

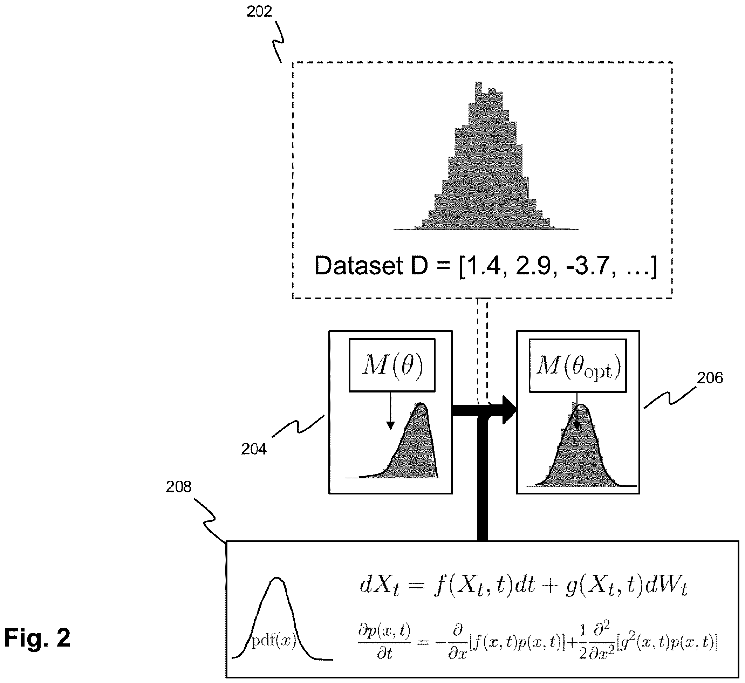

**Fig 2.** schematically describes an another general data-driven generative modelling setting. If the input dataset D **202** results from a system of stochastic differential equations **208** (discussed in more detail below with reference to eq. (6)), the optimised model **206** may be constrained by temporal and/or spatial derivatives of the stochastic differential equations **208**. Typically, an equation of motion may be determined for the time-dependent probability distribution function of a stochastic variable, e.g., a Fokker-Planck equation (FPE) or a Kolmogorov backward equation (KBE). This way a time evolution of the distribution can be determined. Models that are constrained by such derivatives typically give a more faithful representation of the underlying processes, and hence result in better data. However, optimising both a model and its derivatives is not a trivial task, and is in many cases not even possible.

In contrast to classical generative modelling, quantum generative modelling (QGM) aims to exploit a quantum model comprising a plurality of trainable quantum circuits that can prepare distributions as quantum states, for instance trying to match patterns from available data. Being a subject of emerging quantum machine learning (QML), quantum generative modelling utilizes the Born rule which gives the probability that a measurement of a quantum system will yield a given result. The goal is to represent a parametrized probability distribution $p_\theta(x)$ as a probability to measure a bit string $x$ from a variational state $|\psi_\theta\rangle$ parametrized by a vector of gate parameters $\theta$. For the simple case of pure states this reads $p_\theta(x)=|\langle x|\psi_\theta\rangle|^2$.

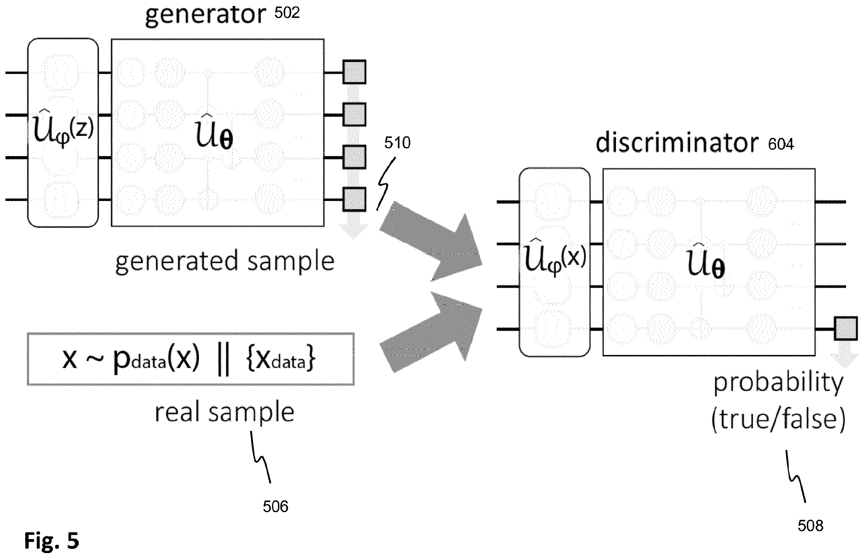

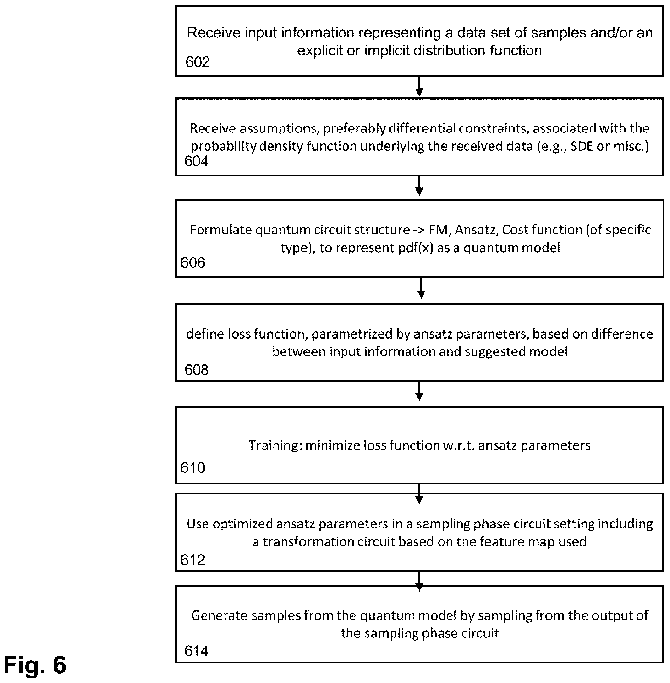

Known QGM methods include an approach based on quantum circuit Born machines (QCBMs) that learn models *directly* from samples of a target distribution $p_{target}(x)$ using various loss functions. Here, directly means that a sample can be determined directly from a measured wavefunction, so that for one sample in principle only one quantum measurement is needed. QCBMs are discussed in more detail below with reference to **Fig. 5.** A similar approach may be used for generating circuits in quantum generative adversarial networks (QGANs), where a training schedule usually corresponds to the minimax game. QGANs are discussed in more detail below with reference to **Fig. 6.** Quantum circuit Born machines have previously been used for loading static distributions corresponding to barsand-stripes datasets, learning datasets of correlated currency pairs, and digitized Gaussian and bimodal distributions. Quantum generative adversarial networks were used for (reduced) MNIST datasets, financial modelling, learning pure states, and sampling particle traces.

While making a step towards sampling-based advantage, which means a quantum advantage over classical sampling methods, current QGM performance is largely limited even for idealized state vector simulators. First, the generators described in the prior art are very difficult to train, as they require matching $O(2^N)$ amplitudes for $N$-qubit registers and require finding a corresponding state for some vector $\theta$. Second, QCBM and QGAN architectures are not automatically differentiable with respect to variable x, and have limited application for solving stochastic differential equations (SDEs). The latter would be hugely beneficial as differential constraints remove strong dependence on data, the need to regularize models, and offer additional structure to learning. SDE-based sampling is also motivated by works in which Monte-Carlo techniques are used, e.g. in the financial sector.

The difficulty of training quantum generators may be partially alleviated using the feature map encoding of continuous distributions, at the expense of requiring multi-shot measurements to get a sample from QNNs, meaning potentially many quantum measurements need to be taken to get a single sample out.. The second point may be remedied (at east in part) by quantum quantile mechanics (QQM) [add reference to the QQM application], where a quantum circuit is trained to generate samples from SDEs and can be evolved in time, albeit with the same issue of many required quantum measurement through expectation-based sampling. Combining differentiability with fast sampling will offer both an expressivity advantage and a sampling advantage of quantum computing.

In this disclosure, embodiments are described for scalable training of quantum generators that can be differentiated with respect to a continuous stochastic variable. The method comprises separate training and sampling stages of quantum generative modelling. During the training stage, a model is built in a latent space (taken as a phase) enabled by a phase feature map, which is followed by a variational circuit and DQC-type readout, meaning expectation values are read out in the training part .The sampling stage is then performed in a bit basis space enabled by a fixed unitary transformation (e.g., a quantum Fourier transform), and may be followed by projective measurements for a sample-by-sample readout.

The described embodiments define differentiable quantum generative modelling (DQGM) circuits, which may be used for sampling from stochastic differential equations. Another advantage of training the quantum model in the phase space is that the model is inherently regularized. This is enforced by qubit-wise learning, feature map sparsification, and frequency-taming techniques for circuit initialization based on Fourier series.

A probability distribution (or alternatively, a generic function) may be loaded into state amplitudes, after which the Fokker-Planck equations may be solved, giving access to a time-series of the Black-Scholes model. Finally, considering correlated registers where quantum correlations are included by entangling circuits, examples are given of classically hard multidimensional distributions that can be automatically "inverted" by quantum computers. This leads to a sampling advantage. These aspects will be described hereunder in more detail.

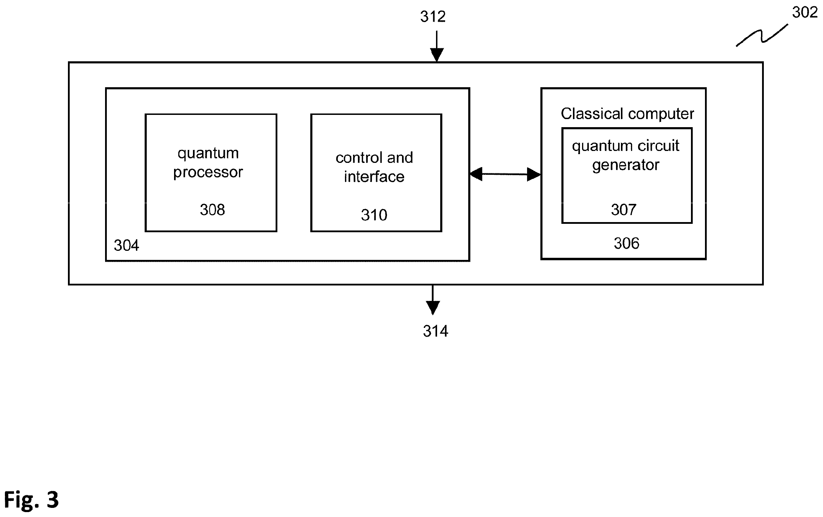

**Fig. 3** depicts a hybrid computer processor **302** comprising a quantum computer system **304,** one or more quantum processors **308,** e.g. a gate-based quantum processor, and a controller system **310** comprising input output (I/O) devices which form an interface between the quantum processors and the outside world, e.g. the one or more classical processors of a classical computer **306.** For example, the controller system may include an optical or electrical system for generating optical or electrical pulses respectively which are used to manipulate the qubits. Further, the controller may include readout circuitry for readout of the qubits. For at least a part such readout circuitry may be located or integrated with the chip that includes the qubits.

The system may further comprise a (purely classical information) input **312** and an (purely classical information) output **314.** Input data may include information about the training data, stochastic differential equation(s) used as constraints in the generative modelling. This information may include the dimensionality, order, degree, coefficients, boundary conditions, initial values, regularization values, etc. The input data may be used by the system to classically calculate values, e.g. parameter settings, which may be used to initialize the quantum circuit that is implemented on the quantum processor. Similarly, output data may include loss function values, sampling results, correlator operator expectation values, optimization convergence results, optimized quantum circuit parameters and hyperparameters, and other classical data.

Each of the one or more quantum processors may comprise a set of controllable multi-level quantum systems, e.g. two-level quantum systems referred to as qubits. The two levels are $|0\rangle$ and $|1\rangle$ and the wave function of a $N$-qubit quantum processor may be regarded as a complex-valued superposition of $2^N$ of these distinct basis states. Examples of such quantum processors include noisy intermediate-scale quantum (NISQ) computing devices and fault tolerant quantum computing (FTQC) devices. Alternatively and/or in addition, the one or more quantum processors may comprise a set of continuous variable systems, such as optical or photonic quantum computers. Furthermore, the quantum processor may comprise a Gaussian Boson Sampling device.

Generative modelling concerns the process of drawing samples of a stochastic variable $X \sim p_\theta(x)$ for a trainable parametrized distribution. In the generic quantum case, the quantum model may be constructed using Born's rule, $p_\theta(x)$ = tr$\{|x\rangle\langle|\hat{\rho}_\theta\}$, where samples $x$ corresponding to length-$N$ binary strings are readout from the density operator $\hat{\rho}_\theta = \varepsilon_\theta(\hat{\rho}_0)$ created by a parametrized completely positive trace-preserving (CPTP) map $\varepsilon_\theta$ from some initial density operator $\hat{\rho}_0$. The latter typically corresponds to the computational zero state $\hat{\rho}_0 = |\emptyset\rangle\langle\emptyset|$, where $|\emptyset\rangle \equiv |0\rangle^{\otimes M}$ for $M \geq N$. In many cases unitary quantum channels are considered, $\mathcal{E}_\theta(\hat{\rho}_0) = \hat{U}_\theta \hat{\rho}_0 \hat{U}_\theta^\dagger$ with $M = N$ and $\hat{U}_\theta$ is a generic parametrized unitary operator operating on the $N$-qubit register. When $\hat{U}_\theta \in \mathcal{SU}(2^N)$, in principle, any state of the register can be prepared, and such model may be called maximally expressive. Typically, QCBM-style generative modelling relies on sample-based training of $p_\theta^{\mathrm{QCBM}}(x) = \mathrm{tr}\{|x\rangle\langle x|\hat{U}_\theta \hat{\rho}_0 \hat{U}_\theta^\dagger\}$ at digital (i.e. integer, binary) values of $x$ only. The generic goal is to minimize a loss function $\mathcal{L}_\theta^{\mathrm{QCBM}} = \sum_{x=0}^{2^N-1} \mathfrak{D}\left[p_{\mathrm{target}}(x), p_\theta^{\mathrm{QCBM}}(x)\right]$, for some distance measure $\mathfrak{D}[\cdot,\cdot]$, and getting optimal angles $\theta_{\mathrm{opt}} = \mathrm{argmin}_\theta[\mathcal{L}_\theta^{\mathrm{QCBM}}]$. Once $p_\theta^{\mathrm{QCBM}}(x)$ is successfully trained, the optimized circuit can be directly used for generating samples.

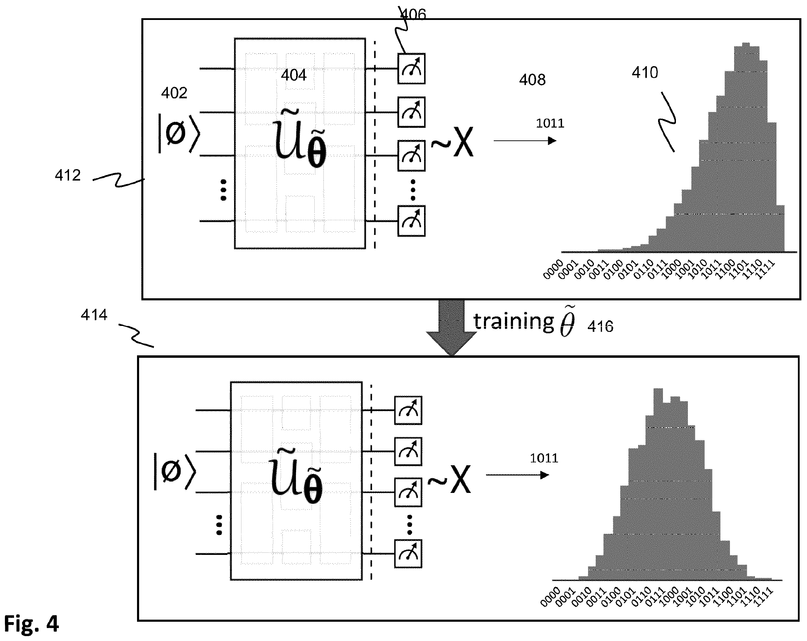

**Fig. 4** schematically depicts a QCBM as an example of a quantum generative model. A QCBM can be executed on a qubit-based quantum processing architecture in hybrid feedback loop with a classical computer as explained above with reference to **Fig. 3.** Initially in a learning phase **412,** qubits of a quantum processor may first be initialized in the $|0\rangle$ state **402.** Then, a unitary operation **404** (such as a gate-based quantum circuit, or a Hamiltonian evolution, etc.) may be performed on the qubits, which is parameterized by some classical numbers $\theta$ controlled by the classical computer. Finally, samples are extracted simply by measuring the qubits in the Z-basis (bit-basis) **406** to result in bitstrings $X$ such as {1011} **(408).** After sampling many times, a distribution or histogram **410** can be constructed from the ensemble of results. This histogram can be compared to an existing target distribution using various comparisons, including Kullbeck-Leibner divergence, etc. The difference is minimized in an optimization loop called 'training' **416** with respect to parameter $\theta$. After training **414,** the output, when sampled, resembles the target distribution within a small quantity of a distance measure such as Kullback-Leibler divergence

**Fig. 5** schematically depicts a QGAN as a further example of a quantum generative model. Quantum generative adversarial networks (QGANs) follow the same scheme as their classical counterparts, but substitute the neural representation of the generator $G_{NN}$ and/or discriminator $D_{NN}$ by quantum neural networks. In the following, these are denoted as $G_Q$ and $D_Q$, respectively. The schedule of QGAN training and quantum circuits used for such training are presented in **Fig. 5.** In particular, the figures depict a typical generative adversarial network (GAN) setup including generator **502** and discriminator **504** for learning to represent a distribution from input data **506.** In particular, the figures illustrate a QGAN workflow wherein quantum circuits are used both for generative modelling at t = $T_{\mathrm{min}}$ (generator **502**) and discrimination between real and fake samples (discriminator **504**). The generator circuit $G_Q(z)$ may comprise a product feature map **503** and a hardware efficient ansatz (HEA) variational circuit **505.** The discriminator $D_Q(x)$ is trained to distinguish, e.g. in the form of a probability measure **508,** between samples generated by the generator **502** and samples **506** selected from the initial data distribution. Importantly, the generated sample is estimated using a Hamiltonian averaging procedure **510,** meaning that each sample requires many measurement samples, i.e. many repetitions on the quantum processor, to be estimated accurately. This is contrary to the QCBM setting, where one (single) measurement sample (one repetition on the quantum processor) corresponds to one (single) generative sample.

The embodiments in this disclosure, which may be referred to as differentiable quantum generative modelling (DQGM), work differently compared to the known quantum generative models of **Fig. 4** and **5.**

**Fig 6** shows a schematic diagram of a DQGM workflow according to an embodiment. A first step **602** may include receiving input information associated with a probability density function. The input information can include data samples, explicit or implicit distribution functions or stochastic differential equation or other distribution descriptions.

A step **604** includes receiving one or more assumptions related to the probability density function. The assumptions may include, e.g., a stochastic differential equation (preferably one for which it is assumed to model the distributions well), or partial or ordinary differential equations describing (stationary) behaviour of distributions. In an embodiment, the assumptions may include constraints formulated in the form of operators on the probability density function.

Next (step **606**) a training stage quantum circuit structure may be formulated. The training stage quantum circuit may include a feature map, such as a phase feature map, for transforming a point $x$ in the real space to the (Hilbert) phase space, a quantum circuit ansatz transforming a state using one or more trainable (ansatz) parameters $\theta$, and a cost function and/or cost operator. When the trainable quantum circuit is evaluated on a quantum processor, a measurement on an expectation value of the cost operator will represent the probability density function evaluated at a point $x$ given to the quantum feature map.

A step **608** comprises defining a loss function. The loss function may be parameterized by the quantum circuit ansatz parameters, and may be based on the difference between input information and signatures of a suggested model signatures and suggested not really clear. Here suggested is similar to 'trial function': it is what comes out of the training circuit, p(x). in the form of the suggested model's probability density function and/or sampling distributions.

A step **610** comprises training the trainable quantum circuit in order to minimize the loss function defined in step **608**. The steps of training the quantum circuit includes: executing the trainable quantum circuit on the quantum processor, wherein the executing includes:

1. transforming quantum gate operations of the quantum circuit into a sequence of control signals representing the quantum gate operations

2. apply the sequence of control signals to the one or more qubits of the quantum processor to control the one or more qubits of the quantum processor to perform the quantum gate operations.

3. apply a sequence of control signals to the one or more qubits of the quantum to measure a state of the one or more qubits, the state representing an expectation value of the cost operator

4. minimizing the loss function on the basis of the measured expectation value may comprise variationally tuning the circuit ansatz parameters until convergence criteria are met. This may result in optimized ansatz parameters $\theta_{opt}$.

A step **612** comprises defining a sampling phase quantum circuit structure, which is used in order to generate samples from a target distribution. The sampling phase quantum circuit may be based on the resulting optimized ansatz parameters; in that case, the generated samples correspond the optimized distribution function associated with the above described training circuit. The sampling phase circuit may include the original ansatz, daggered (meaning the unitary operation is applied in inverse, as an example for single-qubit gate rotations: the gate order is reversed and their parameters flip their sign), followed by an appropriate unitary transformation associated with the type of feature map used in the training phase.

The steps of defining the quantum circuit, and generating samples from the quantum computer given this circuit **614,** include:

1. transforming quantum gate operations of the quantum circuit into a sequence of control signals representing the quantum gate operations

2. apply the sequence of control signals to the one or more qubits of the quantum processor to control the one or more qubits of the quantum processor to perform the quantum gate operations.

3. apply a sequence of control signals to the one or more qubits of the quantum to measure a state of the one or more qubits, a single measurement representing a single sample generated at the output in the computational bit-basis

4. repeating the sampling process to generate the desired number of samples

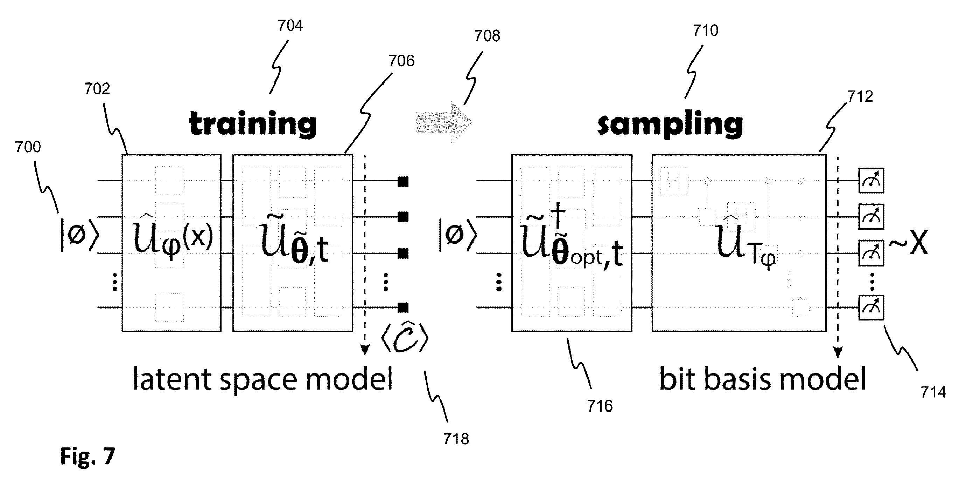

**Fig. 7** schematically shows DQGM training and sampling process according to an embodiment. The method comprises a training stage **704** for training quantum neural network and a sampling stage **710,** wherein a quantum circuit is used for generating samples. In the training stage, a latent space quantum model representation is used, where a phase feature map **702** is directly followed by variational circuit **706** and a cost function **718** for measuring the output of the latent (phase) space model. This latent space quantum model representation may be referred to as a quantum neural network (QNN). Thus, the QNN defines a variational quantum circuit that is trained to represent a function or value, in this particular case a probability density function.

The training of the QNN includes initialization of the qubits **700** in an initial state, the application of a quantum feature map unitary **702** to map a real parameter $x$ into the Hilbert phase space (which may be regarded as the "input *x* to the QNN"), the application of a variational quantum circuit **706** (an ansatz) parameterized by 'variational parameters' $\theta$, as well as fixed additional parameters t governing the shape of probability distribution that is modelled and a measurement of a cost function value $\langle \hat{C} \rangle$ on the qubits of the quantum computer, wherein the cost function value represents the probability density function value evaluated at

$$x, \, p_{\Theta,t}(x) = \langle \hat{C} \rangle$$

**718.** In this application, the QNN cost function is assumed to be a $\rho_0$ state or a local cost operator, and can be measured by Hamiltonian averaging, QPE, state-overlap or other operator estimation techniques.

At the sampling stage **710**, the trained variational circuit **716** is daggered and the model from the latent space is mapped to a bit space using a transformation unitary **712**, while the feature map and inverse basis transformation are treated as projective measurement and are subsumed in a sampling process **714**.

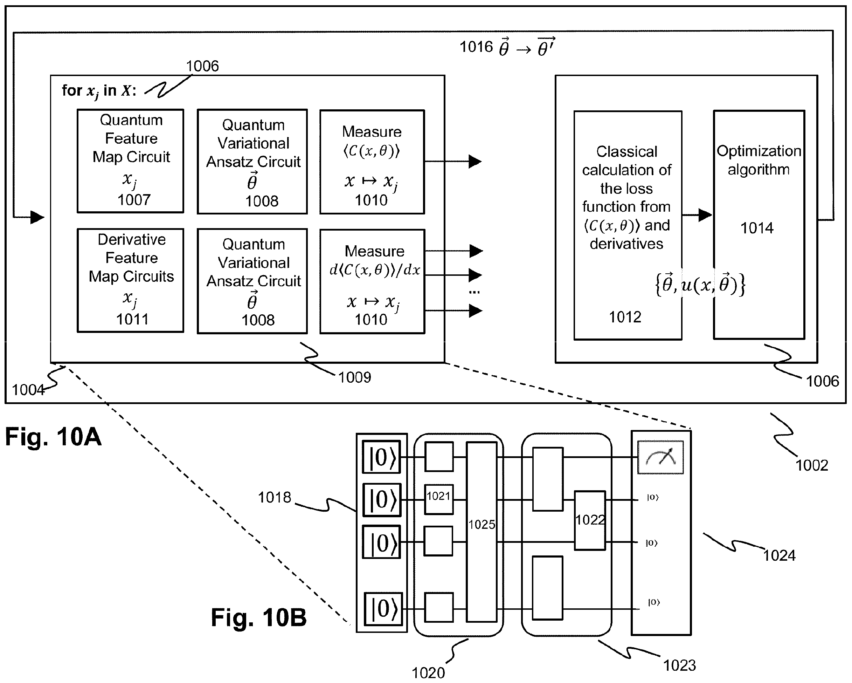

These steps [all training and sampling steps of Fig. 7 correct? yes] will be described in more detail below, wherein coefficients such as variational coefficients $\theta$ may be optimized in a quantum-classical hybrid loop in order to reduce the loss function value for $\theta$ settings as described below with reference to **Fig. 10.**

A protocol for generating computational states $\{|x\rangle\}$ (each associated to binary strings $x \in \mathcal{B} = \{00..0, 10..0, ..., 11..1\}$) may be executed in two steps, as follows [what is explained hereunder? Construction $\hat{U}_\varphi(x)$ and $\hat{U}_\mathrm{T}$? yes] First, a parametrized feature map $\hat{U}_\varphi(x)$ **702** may be created which represents a latent (phase) space representation of the variable *x*, $\hat{\rho}_{\tilde{x}} = \hat{U}_\varphi(x) \, \hat{\rho}_0 \hat{U}_\varphi^\dagger(x)$. Here, $\hat{\rho}_{\tilde{x}}$ may be a density operator encoding variable x in the phase space. The corresponding circuit may be referred to as the phase feature map. For $\hat{\rho}_0$ = |ø⟩⟨ø|, the phase feature map may for example be expressed as a sequence of single qubits operations

$$\hat{U}_\varphi(x) = \prod_{j=1}^{N} \left[ \hat{R}_j^z \left( \frac{2\pi x}{2^j} \right) \hat{H}_j \right] \tag{1}$$

where

$$\hat{R}_j^z(\phi) = \cos(\phi/2)\, \hat{\mathbb{1}}_j - i \sin(\phi/2)\, \hat{Z}_j$$

is a single-qubit rotation and $\hat{H}_j$ is a Hadamard gate, acting at qubit j. In an embodiment, (restricted) qubit-dependent coefficients $\xi_j$ may be included that may be used for transforming (stretching or squeezing) coordinate x. The phase feature map of Eq. (1) maps an initial state into a superposition product state $\hat{\rho}_{\tilde{x}}$ = |x̃⟩⟨x̃| based on the latent state $|\tilde{x}\rangle := \hat{U}_\varphi(x) |ø\rangle$, which explicitly reads

$$|\tilde{x}\rangle = \frac{e^{-i\Phi/2}}{2^{N/2}} \bigotimes_{j=1}^{N} \left( |0\rangle_j + \exp\left( -i \frac{2\pi x}{\xi_j 2^j} \right) |1\rangle_j \right), \tag{2}$$

where $\Phi = 2\pi(1 - 2^{-N})$ is an overall phase. Importantly, the phase space representation contains all computational basis states, which can be labelled by integers $\{x_\ell\} = \{0, 1, ..., 2^N - 1\}$. States associated with these computational basis states are not entangled.

Next, a quantum circuit $\hat{U}_\mathrm{T}$ may be applied **712** such that it transforms latent states $\{|\tilde{x}_\ell\rangle\}$ into binary states $\{|x\rangle\}$ as a bijection. The corresponding density operator $\hat{\rho}_x = \hat{U}_\mathrm{T} \hat{\rho}_{\tilde{x}} \hat{U}_\mathrm{T}^\dagger$ thus encodes the variable *x* in the bit basis. The simplest case for such a transformation is for $\xi_j = 1 \, \forall \, j$. In this case, the mapping corresponds to an inverse quantum Fourier transform (QFT) circuit, $\hat{\mathcal{U}}_{\mathrm{T}} = \hat{\mathcal{U}}_{\mathrm{QFT}}^{\dagger}$, which comprises $O(N^2)$ gates (Hadamard gates and controlled-phase gates).

Having generated the state $\hat{\rho}_x$, a variational ansatz may be applied. This variational ansatz may be chosen in the form

$$\hat{\mathcal{W}}_{\tilde{\theta}} = \tilde{\mathcal{U}}_{\tilde{\theta}}\hat{\mathcal{U}}_{T}^{\dagger},$$

where the tilde in $\tilde{\theta}$ and $\tilde{\mathcal{U}}_{\tilde{\theta}}$ indicates that the circuit structure and parametrization angles as described in this disclosure are those of the DQGM methods, which are different from the circuit structure and parametrization angles according to known QCBM methods.

The DQGM model is built and trained **704** fully in the latent space, $\tilde{p}_{\tilde{\theta}}(x) =$

$$\mathrm{tr}\{\hat{\mathcal{C}}_{\emptyset}\tilde{U}_{\tilde{\theta}}\,\hat{\rho}_{\tilde{x}}\,\tilde{U}_{\tilde{\theta}}^{\dagger}\},$$

with a cost (measurement) operator **718** being

$$\hat{\mathcal{C}}_{\emptyset} = \rho_0.$$

The model is trained to match the target distribution for

$$\tilde{\theta}_{\mathrm{opt}} = \mathrm{argmin}_{\tilde{\theta}}\ \textstyle\sum_{x\in\mathcal{X}} \mathfrak{D}\big[p_{\mathrm{target}}(x), \tilde{p}_{\tilde{\theta}}(x)\big] \qquad (3)$$

for a grid $\mathcal{X}$ of real-valued $x \in [0,1)$. Due to training in the latent space, the cost can be, e.g., a local operator, or a single-ancilla SWAP test for measuring the overlap. Because $X \sim p_{\tilde{\theta}_{\mathrm{opt}}} = \mathrm{tr}\{|x\rangle\langle x|\hat{\mathcal{U}}_{\mathrm{T}}\tilde{\mathcal{U}}_{\tilde{\theta}_{\mathrm{opt}}}^{\dagger}\hat{\rho}_0\tilde{\mathcal{U}}_{\tilde{\theta}_{\mathrm{opt}}}\hat{\mathcal{U}}_{T}^{\dagger}\}$, the trained model may be sampled **714** using projective measurements.

To show that the model can successfully be sampled in the bit basis, the connection between DQGM and QCBM may be formulated as follows: probability distributions of binary samples {X} from maximally expressive QCBM at global optimum $\theta_{\mathrm{opt}}$ and maximally expressive DQGM at global optimum $\tilde{\theta}_{\mathrm{opt}}$ are equivalent. This follows form the following observations. Generative modelling from QCBM can be expressed as sampling from an generalized probability distribution

$$p_{\theta}^{\mathrm{gQCBM}}(x) = \mathrm{tr}\{|x\rangle\langle x|\hat{\mathcal{U}}_{\theta}\hat{\rho}_0\hat{\mathcal{U}}_{\theta}^{\dagger}\} = \mathrm{tr}\{\hat{\mathcal{C}}_{\emptyset}\hat{\mathcal{U}}_{\varphi}^{\dagger}(x)\hat{\mathcal{U}}_{T}^{\dagger}\hat{\mathcal{U}}_{\theta}\hat{\rho}_0\hat{\mathcal{U}}_{\theta}^{\dagger}\hat{\mathcal{U}}_{\mathrm{T}}\hat{\mathcal{U}}_{\theta}\}, \qquad (4)$$

where $\hat{\mathcal{U}}_{\varphi}^{\dagger}(x)$ corresponds to the phase feature map. At digital values of the variable x, Eq. (4) corresponds to $p_{\theta}^{\mathrm{QCBM}}(x)$, but extends QCBM to $x \in \mathbb{R}$. Note that in the intervals between digital points $\ell < x < \ell + 1$ ($\ell = 0, 1, ..., 2^N - 2$) the samples come from the superposition of neighbouring states, $\propto \alpha|x_{\ell}\rangle + \beta|x_{\ell+1}\rangle$ (with x-dependent complex coefficients $\alpha, \beta$), preserving sampling locality. The latent DQGM model can be rewritten as

$$\tilde{p}_{\tilde{\theta}}(x) = \mathrm{tr}\{\hat{\rho}_{\tilde{x}}\,\tilde{U}_{\tilde{\theta}}^{\dagger}\,\hat{\rho}_0\,\tilde{U}_{\tilde{\theta}}\} = \mathrm{tr}\{|x\rangle\langle x|\hat{\mathcal{W}}_{\tilde{\theta}}^{\dagger}\,\hat{\rho}_0\,\hat{\mathcal{W}}_{\tilde{\theta}}\} \qquad (5)$$

directly following from cyclic properties of the trace and previously introduced definitions.

Comparing models in Eq. (4) and Eq. (5), and given that quantum states $\hat{\mathcal{U}}_\theta \hat{\rho}_0 \hat{\mathcal{U}}_\theta^\dagger$ and

$$\hat{\mathcal{W}}_{\tilde{\theta}}^\dagger \, \hat{\rho}_0 \, \hat{\mathcal{W}}_{\tilde{\theta}}$$

are trained to match the same target distribution, for maximally expressive circuits

$$\hat{\mathcal{U}}_\theta, \widetilde{U}_{\tilde{\theta}} \in \mathcal{SU}(2^N)$$

the probability distributions match at global optimum, $p_\theta^{\mathrm{gQCBM}}(x) = \tilde{p}_{\tilde{\theta}}(x)$ This follows from the fact that both circuits are *in principle* capable of expressing any state (quasi-distribution), wherein $\hat{W}_{\tilde{\theta}}$ can absorb a fixed transformation with re-adjusting the angles, and both aim to prepare the same optimal state.

While it has been shown that the two approaches are equivalent during the sampling stage , the two models are vastly different during the training stage. For the QCBM and its generalization in Eq. (4) the sampling and training settings are the same, and require a variational state to match bitstring probabilities for $O(2^N)$ states already in training. This is a challenging setting and requires for deep variational circuits which is challenging for hardware due to noise in near-term devices (NISQ) .

For the DQGM, only training of the latent model is required, where a superposition product state is obtained from x-parametrized single qubit rotations (spans all $O(2^N)$ amplitudes) and needs a certain overlap with a variational state (also with support on $O(2^N)$ amplitudes). Compared to the QCBM case, this is task is substantially easier to achieve, as will be shown below in more detail. As DQGM and QCBM originate from the same phase feature map, they have the same *model capacity* - a spectrum characterized by exponentially large number of frequencies (as discussed in more detail below). At the same time, DQGM has better *model expressivity* in terms of access to Fourier coefficients for relevant low-frequency components, thanks to the (non-variational) unitary transformation $\hat{\mathcal{U}}_{\mathrm{T}}$ that removes part of the training complexity.

Additionally, an important advantage of the embodiments in this disclosure is the possibility to differentiate the model. This can be done by using quantum automatic differentiation applied to the phase feature map. As the latent model is used for training, differential constraints may be applied at the training stage. Once the model has been trained, it may be sampled. Differential constraints are of importance for a wide variety of applications in, e.g., physics, finance, biology, and chemistry.

In general, a system of stochastic differential equations may be written as

$$\mathrm{d}X_t = f(X_t, t)\,\mathrm{d}t + g(X_t, t)\,\mathrm{d}W_t, \qquad\qquad (6)$$

where $\mathrm{d}W_t$ is a standard Wiener process, $X_t$ is time-dependent stochastic variable, and $f(\cdot)$ and g($\cdot$) are scalar functions that are typically referred to as drift and diffusion. For any stochastic differential equation in the form of Eq. (6), an equation of motion for the probability distribution may be determined for the time-dependent probability distribution function $p(x, t)$ of the stochastic variable $X_t$, e.g., a Fokker-Planck equation (FPE) or a Kolmogorov backward equation (KBE).

Once the probability distribution function $p(x, t)$ is known in the domain of interest

$$t \in \mathcal{T},$$

stochastic trajectories (samples from time-incremented distributions) may be obtained, offering full generative modelling of a time-series. However, known methods require a costly inversion procedure (or equivalent) to generate samples based on (only) the probability distribution function $p(x, t)$, and such sample generation is challenging for multidimensional problems. Advantageously, the quantum generative models described in this disclosure only require learning t-parametrized DQGM at different times, thus giving direct access to fast sampling. The method will be discussed in more detail below.

The system of stochastic differential equations from Eq. (6) can be approached from a data-driven perspective, which starts with learning a representation of a steady state from available samples. Advantageously, this procedure enables model discovery, as drift and diffusion coefficients may not be immediately known. Setting the loss function for DQGM as

$$\mathcal{L}_{\boldsymbol{\theta}}^{\text{data}} = \sum_{x \in \mathcal{X}} \mathfrak{D}\big[p_{\text{target}}(x, t_0), \tilde{p}_{\boldsymbol{\theta}}(x, t_0)\big], \tag{7}$$

a probability distribution may be determined at a point of time $t_0$.

Now, let us comment on two possible ways of encoding the time variable. First, time t can be embedded explicitly. One option is to use a t-dependent feature map for parameterizing the model. For instance, we employed it successfully in DQC-based quantum function propagation \cite{QQM}. In this case, it is convenient to use an identity-valued feature map at $t_0$, and learn to adjust angles as t deviates from $t_0$. Second, explicit encoding of time can take a polynomial of t (or even a feed-forward neural network), with thetas being trainable coefficients. In this case, t = $t_0$ training can be performed for zeroth degree term, and adjusting remaining coefficients at other times. Finally, we can also assume an implicit dependence of variational coefficients theta on time. In this case, we learn to represent data at $t_0$ with parameters theta($t_0$), and then demand that each point of time the distribution satisfies differential constraints for a PDE in question. This will lead to model-depend updates of variational parameters, thus evolving the model in discrete time. Below, we show how to introduce model-dependent differential constraints, and training or evolving DQGM in both explicit and implicit manner. We note both are physics-informed, and represent a step forward from static sample generation.

Once the probability distribution has been determined at $t_0$, model-dependent differential constraints may be introduced to train the DQGM in a model-informed way, which means the solutions match models such as differential equations found in physics, finance, biology etc, and to evolve the distribution in time.

Given the SDE , the associated $p(x, t)$ requires solving a PDE either forward or backward in time. The former case corresponds to solving the Fokker-Planck equation (corresponding to Kolmogorov forward equation). A generic Fokker-Planck equation can be written as

$$\frac{\partial}{\partial t} p(x, t) = -\frac{\partial}{\partial x}[f(x, t)\, p(x, t)] + \frac{1}{2}\frac{\partial^2}{\partial x^2}[g^2(x, t)\, p(x, t)], \tag{8}$$

and the system may be evolved towards a stationary state at $t_s > t$ from some initial distribution. The stationary distribution of the Fokker-Planck equation FPE then satisfies the second-order differential equation

$$\text{FPE}(p, x, t_s; f, g) := -\frac{\mathrm{d}}{\mathrm{d}x}[f(x, t_s)\, p(x, t_s)] + \frac{1}{2}\frac{\mathrm{d}^2}{\mathrm{d}x^2}[g^2(x, t_s)\, p(x, t_s)] = 0. \tag{9}$$

The corresponding differential constraint on the probability distribution may be referred to as the FPE differential operator. Specifically, $p(x, t_s)$ may be substituted by $\tilde{p}_{\theta}(x, t_s)$ and a quantum generative model may be trained to respect the FPE constraint by assigning the differential loss

$$\mathcal{L}_{\boldsymbol{\theta}}^{\text{diff}} = \sum_{x \in \mathcal{X}} \mathfrak{D}[0, \text{FPE}(\tilde{p}_{\boldsymbol{\theta}}, x, t_s; f, g)], \tag{10}$$

such that it remains true for all x. This inherently regularizes the model, and, in particular, leads to improved derivatives. This, in turn, leads to improvements for studying tails of probability distributions and for studying dynamics of probability distributions. Next, we note that we can train a quantum model to represent the PDF at some point of time $t_0$ using data as a snapshot during evolution. Then, the full PDE and associated differential constraints are used to propagate it in $t_0 < t < t_s$ interval reaching the steady state at $t_s$. Specifically, we can write the differential loss based on the difference of the RHS and the LHS of the FPE, which we call as the FPE differential operator FPE(p,x,t; f,g). In minimizing the loss we assume the explicit time embedding. Then the workflow for evolving differentiable quantum generative models has the style similar to PINN/DQC workflow \cite{DQC}. Once done, the model can be sampled within the trained region, and generalized in between the points.

Alternatively, we can use an evolutionary approach to updating circuit parameters. In this case, the time-derivative of our model can be re-expressed using a chain rule. The differential constraints in space and time then can be performed using a simple Euler's forward update where hyperparameters are recalculated as we "march" over the grid of times. Going beyond linear updates, more sophisticated schemes (e.g. Runge-Kutta) can be employed.

Finally, the probability distribution can also be evolved using the Kolmogorov backward equation (KBE) -instead of (or in addition to) using the Fokker-Planck equationwhen a goal is to study the dynamics at times prior to the steady state. Define $\tau < t_s$ as a backward time, the generic Kolmogorov backward equation (KBE) associated to the stochastic differential equation given in Eq. (6) reads

$$-\frac{\partial}{\partial \tau} p(x,\tau) = f(x,\tau)\frac{\partial}{\partial x} p(x,\tau) + \frac{g^2(x,\tau)}{2}\frac{\partial^2}{\partial x^2} p(x,\tau). \qquad (11)$$

Using this equation, a starting point be conveniently be chosen as $\tau = t_s$ and the probability distribution $p(x,\ \tau < t_s)$ may be evolved backward in time, discovering (and sampling) the model at earlier times.

The Kolmogorov backward equation can be solved using differentiable quantum generative models with a time-dependent feature map, in a way that may be considered similar to PINN/DQC workflow. The differential loss may be based on the difference of the right-hand side and the left-hand side of the Kolmogorov backward equation, which may be referred to as the KBE differential operator KBE($p$, $x$, $\tau$; $f$, $g$). The associated loss function $\mathcal{L}_\theta^{\mathrm{evol}}$ may be defined as

$$\mathcal{L}_\theta^{\mathrm{evol}} = \sum_{x,\tau \in \mathcal{T} \times \mathcal{X}} \mathfrak{D}[0, \mathsf{KBE}(\tilde{p}_\theta, x, \tau; f, g)]. \qquad (12)$$

Once the model has been trained with such a loss function, the model can be sampled within the trained region, and generalized in between the discrete training points.

In order to solve the stochastic differential equations and/or partial differential equations in the manner explained above, it is necessary to differentiate the proposed model. This differentiation is not possible with many other architectures, such as quantum circuit Born machines and quantum generative adversarial networks. Advantageously, because the methods described in this disclosure are based on the phase feature map, x-derivatives of DQGM can be read out exactly, and more efficiently, by *avoiding* the parameter shift rule.

By construction, the latent space probability distribution $\tilde{p}_{\tilde{\phi}}(x)$ corresponds to a parametrized quantum circuit with feature map encoding, and can be analysed by studying associated Fourier series. In this example, the model capacity of the phase feature map $\hat{\mathcal{U}}_\varphi(x)$ is analysed (while Chebyshev series are available with additional variable transformations, the phase map with homogeneous $\{\xi_j = 1\}_{j=1}^N$ can be analysed in the Fourier space). In this disclosure, model capacity is defined as the number of modes (frequencies) that are *in principle* available in the model. This is determined by the spectral properties of the generator of the feature map, $\hat{G} : \hat{\mathcal{U}}_\varphi(x) = \exp(-ix\hat{G}/2)$. Generally, parametrized quantum circuits can represent a function (i.e., a model) as

$$f_\theta(x) = \sum_{\omega \in \Omega} c_{\omega,\theta} e^{i\omega x}, \qquad (13)$$

where the spectrum of frequencies $\Omega$ represent all possible *differences* of eigenvalues of $\hat{G}$, and $c_{\omega,\theta}$ are $\theta$-dependent coefficients associated with each frequency $\omega$. Important properties of the spectrum are that it includes a zero frequency, pairs of equal-magnitude positive and negative frequencies, and coefficients that obey $c_\omega = c_{-\omega}^*$, leading to real-valued models (as expected from an expectation value).

While the analysis could proceed by studying the generator of the phase map, in this case, the model capacity can be derived explicitly from the latent state written in Eq. (2). The phase for each qubit rotation may be defined as $\varphi_j := 2\pi/(2^j \xi_j)$. As an $N$-qubit superposition state $|\tilde{x}\rangle$ has an equal overlap with all computational basis states, $|\langle x|\tilde{x}\rangle|^2 = 1/2^N \ \forall \ x \in B$ (where $B$ is the set of bit strings with $N$ bits), but each individual contribution comes with a different phase (sum of individual $<\varphi_j$s). Expanding the tensor product in Eq. (2) it can be seen that the computational zero state $|\emptyset\rangle$ has a zero phase.

Next, there are $N$ states with single excitations, $|j\rangle := e^{i\varphi_j x} \hat{X}_j|\emptyset\rangle$, each with a phase exponentially decreasing from the highest ($\varphi_1 = 2\pi/2$) to lowest ($\varphi_N = 2\pi/2^N$) at increasing qubit number. Then, there are $N(N-1)/2$ states with

double excitations, $|jj'\rangle := e^{i(\varphi j+\varphi j)x}\hat{X}_j\hat{X}_{j'}|\varnothing\rangle$, where the corresponding phase is a sum of contributions. In general, there are $N!/m!(N-m)!$ states with m excitations (and sums of m phases), culminating with a fully excited state

$$|\mathbb{1}\rangle := e^{i\Phi}\hat{X}^{\otimes N}|\varnothing\rangle \, ,$$

with $\Phi = \Sigma_j \varphi_j = 2\pi(2^N - 1)/2^N$. The sum of phases associated to bit basis states $\{|x_\ell\rangle\}$ can be collected and will henceforth be referred to as frequencies $\{v_\ell\} = \{2\pi\ell/2^N\}_{\ell=0}^{2^N-1}$. The latent state can then be rewritten in a simple form

$$|\tilde{x}\rangle = \left(e^{-i\Phi/2}/2^{N/2}\right)\sum_{\ell=0}^{2^N-1} e^{iv_\ell x}|x_\ell\rangle. \tag{14}$$

Based on these results, the model itself may be constructed as in Eq. (5), which comes from the overlap (squared) of the latent feature state with an ansatz-prepared state, $\hat{U}_\theta|\varnothing\rangle = \sum_{\ell=0}^{2^N-1} a_{\ell,\theta}|x_\ell\rangle$ (hereafter we simplify the notation by removing tildes where appropriate). The latent space probability distribution then reads

$$\tilde{p}_\theta(x) = \frac{1}{2^N}\sum_{\ell,\ell'=0}^{2^N-1} a_{\ell,\theta}^* a_{\ell',\theta} e^{i(v_\ell-v_{\ell'})x} =$$

$$= \frac{1}{2^N} + \frac{1}{2^{N-1}}\sum_{\ell>\ell'}\left[\text{Re}\{a_{\ell,\theta}^* a_{\ell',\theta}\}\cos[(v_\ell - v_{\ell'})x] - \text{Im}\{a_{\ell,\theta}^* a_{\ell',\theta}\}\sin[(v_\ell - v_{\ell'})x]\right], \tag{15}$$

where in the second line the double sum has been split to show the real and imaginary parts of the 0-dependent density operator elements $a_{\ell,\theta}^* a_{\ell',\theta}$. Furthermore, the quantum state normalization has been accounted for.

As was stated above, the frequencies $\{v_\ell\}$ are integer multiples of the smallest ('base') frequency $2\pi/2^N$ defined by the register size $N$. Looking at the differences of $\{v_\ell - $

$$v_{\ell'}\}_{\ell,\ell'=0}^{2^N-1}$$

it can be seen that the model in Eq. (15) corresponds to Eq. (13) with $\omega \in \Omega = \{0, \pm 1, \pm 2, ..., \pm (2^N - 1)\} \times 2\pi/2^N$, where multiplicity for each frequency decreases as $2^N - \ell$, $\ell = 0, 1, ..., 2^N - 1$. Thus, it suffices to collect the associated coefficients $c_{\omega,\theta}$ for each $\omega$. Consequently, the spectral properties of the phase feature map, and of the associated latent model, establish its model capacity of exponential size with $(2^N - 1)$ nonzero frequencies,

Given the analysis above, the methods in this disclosure provide the following advantages related to successful training of quantum generative models:

1. While DGQM and QCBM both have $O(2^N)$ model capacity, they have different model expressivity in terms of coefficients $\{c_{\omega,\theta}\}$. As variational unitary circuits have limited depth due to trainability, the performance will widely vary depending on typically accessible model coefficients for the given ansatz. The exponential capacity can be then seen as a problem for certain distributions, as highly-oscillatoric terms will lead to overfitting and corrupt derivatives when solving differential equations.

2. In the latent space there is a clear separation between high and low frequency parts of the model, corresponding to qubits with small and large j. This suggest that DGQM can be trained to mostly adjust low frequency components while keeping high frequency components intact, and use the full register for sampling. This is the core of qubit-wise training described in the next subsection. Such an approach does not hold for QCBMs.

3. A family of models accessible by DQGM is that of trigonometric polynomials with exponentially many frequencies and constrained variationally-controlled coefficients. In cases where a smooth probability distribution is modelled, it may suffice to train only the low-frequency part of the register $L < N$ chosen such that $2^L \sim$ poly($N$). This allows for classical Fourier (cosine/sine) series to be used for probability distribution modelling and/or differential equation solving. The quantum model then requires an $O($poly($N$)$)$ depth circuit as an instruction for creating the state $\rho_\theta$ that matches this series. In this case, the system can be initialised close to a predicted solution (performing Fourier series initialization), while still getting sampling advantage for the full register and using the variational state preparation only for inducing further correlations.

4. The structure of the phase map is quite exceptional - unlike product and tower feature maps, where phases of x-dependent rotations are either qubitindependent or have a prefactor of j, the phase feature map has $\sim 2^j$ scaling. Thus, for the same capacity of the phase and product feature maps, the latter will have higher expressivity as more qubits and wider variational circuits are used. This may be exploited by employing a feature map sparsification technique - keeping the spectrum the same, but distributing coefficients over larger registers.

In the embodiments below, several strategies are described that can be used for DGQM training. Specifically, knowledge of the latent space can be exploited to perform training in several stages and provide means of regularizing the trained generative models. This may be referred to as frequency taming.

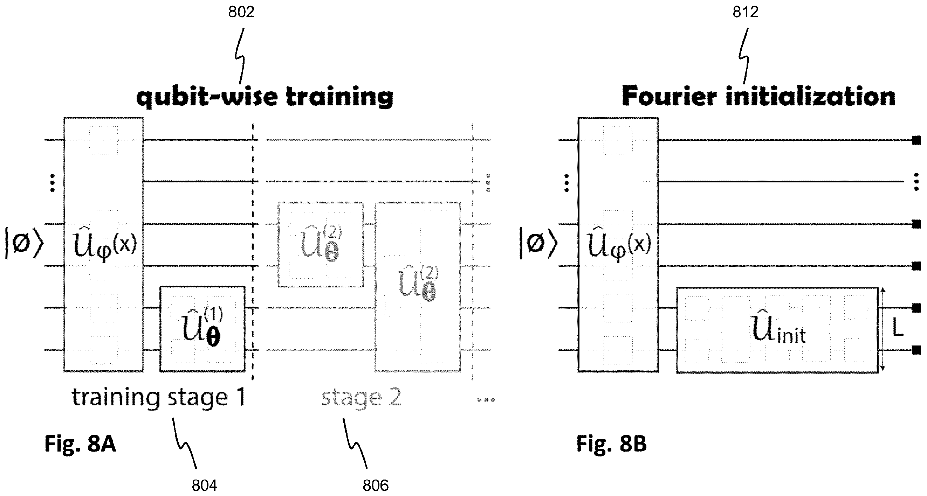

**Fig. 8** schematically shows frequency-taming techniques according to an embodiment. In particular, **Fig. 8A** shows qubit-wise training **802,** where a variational circuit is first trained to adjust a low frequency part of a model in a first stage **804.** In the second stage **806,** $\hat{\mathcal{U}}_\theta^{(1)}$ is kept fixed, and higher frequency components are trained with $\hat{\mathcal{U}}_\theta^{(2)}$. The higher frequency components are then correlated the lower frequency register. This process may continue with ever higher frequencies until sufficient accuracy is achieved. The final optimization run is for the full circuit and register.

As a first frequency-taming technique for DQGM training, the ansatz may be split into lower and higher frequency parts. This may be referred to as qubit-wise learning, similarly to the layer-wise learning in classical and quantum machine learning. The procedure is schematically depicted in **Fig. 8A,** where training of the DQGM is divided into stages.

A first goal is to achieve correct base frequencies for the model, training qubits $j = N, N - 1, ..., N - n$ ($n << N$). Next, quasi-optimal angles are saved for the first cycle of optimization, and proceed to include higher frequencies (qubits with smaller j). Subsequently, the registers may be correlated, e.g., with a tailored ansatz. Finally, when all quasi-optimal angles are found, training is performed for the full register. This approach will be demonstrated below in relation to numerical experiments.

**Fig. 8B** illustrates an example of Fourier initialization **812** according to an embodiment. First, a classical Fourier series is determined for a distribution of interest with $2^L - 1 \sim$ poly($N$) frequencies, and then an initialisation operator $\hat{\mathcal{U}}_{\text{init}}$ (defined below in Eq. (16)) is used to prepare the corresponding state.

One of the common problems affecting machine learning models is initialization that leads to local minima, and prohibits finding high-quality models. Initialization with low-degree polynomial (truncated Chebyshev series) may vastly reduce number of optimization epochs. Here, the structure of the quantum model in Eq. (15) is used, and coefficients are matched for all frequencies $\omega \in \Omega$ by preparing a suitable quantum state

$$\hat{\mathcal{U}}_{\text{init}}|0\rangle^{\otimes L} = \sum_{\ell=0}^{2^L-1} a_{\ell,\text{init}}|x_\ell\rangle \qquad (16)$$

The preparation circuit can be exponentially deep in $L$, but preferably $L$ is chosen such that $L << N$, using only poly($N$) frequencies. Thus, this technique can advantageously be employed in cases where limited expressivity suffices, but fast sampling is needed for dataset augmentation - this is specifically relevant for multi-dimensional distributions.

As noted before, one of the desirable features when working with the feature map of exponential capacity is the possibility to control coefficients for different frequencies. For example, product feature maps have been shown to result in feature maps with better expressivity than serial feature maps, for the same model capacity. This is because in the product case, a single layer of rotations already gives independent control over multiple coefficients, unlike the serial case. For the phase feature map used in the methods in this disclosure, feature map rotations are concatenations of base frequency rotations, and no variational control of the model is allowed at that stage - to enable sampling, the feature map cannot be changed arbitrarily, as it is an integral part of the measurement circuit. This issue can be overcome by spreading the features over larger number of qubits, which may be referred to as feature map sparsification strategy.

Feature map sparsification relies on the fact that two circuits can be concatenated if an (adjusted) quantum gate teleportation circuit is used. In the following example, the x-basis is used for simplicity. As the spectrum of the models is the same, and given that $\hat{H}\hat{Z} = \hat{X}\hat{H}$, an extra layer of Hadamards can be appended to the transformation circuit

$\hat{\mathcal{U}}_T$ .

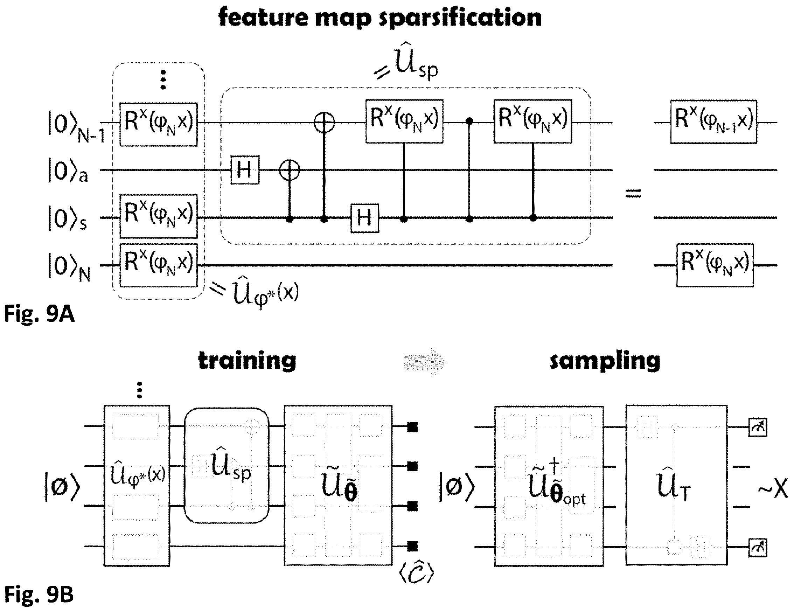

**Fig. 9** schematically shows feature map sparsification according to an embodiment. In particular, **Fig. 9A** shows a (for-example) low-frequency part of the phase feature map, where the rotation gate from the seed qubit (s) is teleported to the register qubit $N-1$, which stores the second lowest frequency. Higher-frequency sparsifications can be constructed in a similar way, with varying split in frequencies (degree of sparsification).

Concentrating on the lowest frequencies, it can be observed that the secondto-last qubit in the feature map shall be in the $\hat{R}^x(\varphi_{N-1}x)|0\rangle_{N-1}$ state, and $\varphi_{N-1} = 2\varphi_N$. Thus, the same state can be prepared by adding two qubits as a seed with $\hat{R}^x(\varphi_N x)|0\rangle_s$ state (labelled as s in **Fig. 9A**). Using a Bell state with an ancilla qubit, the state from the seed can be teleported to the register qubit, such that an additional $\hat{R}^x(\varphi_N x)$ gate is applied. The process can be made deterministic if an x-dependent correction circuit is added. In this case, feature map sparsification is performed by unitary gate $\hat{\mathcal{U}}_{sp}$ , and the circuit identity in **Fig. 9A** holds.

**Fig. 9B** shows training and sampling stages for the sparsified phase map, where the variational circuit acts on all qubits including seeds and ancillas, while during sampling only the $N$-qubit register is transformed and measured. Again, only lowest frequencies are shown.

The feature map sparsification is used during the training stage, where all qubits (including ancillas and seeds) are trained to match the model - this does not change the frequencies, but increases expressivity. This can be shown using an analytical model, which can be derived for the simplest case. Subsequently, during the sampling stage, the trained model is used, but only qubits from the state register on which the transformation (inverse QFT) circuit acts are sampled.

**Fig. 10A** and **10B** show a schematic of a variational feedback loop for a DGQM-based quantum algorithmic subroutine. In particular, **Fig. 10A** shows that now the DQGM structure and optimization schedule are defined, several initialization steps need to be made **1004**. We first need to specify a set of points {X} (a regular or a randomly-drawn grid) for each stochastic variable in the domain of interest **1006**. The variational parameters $\theta$ are set to initial values (e.g. as random angles). The expectation value over variational quantum state for the cost function is estimated **1010,** using the quantum hardware, for the chosen point $x_j$. Then a probability density function suggestion at this point is constructed. Next, the derivative quantum circuits are constructed **1011,1008** and their expectation value is estimated **1010** for the specified cost function, at point $x_j$. Repeating the procedure **1006** for all $x_j$ in {X} function values and derivatives are collected, and the loss function for the entire grid and optional system of Fokker-Planck equations are composed (forming required polynomials and cross-terms by classical post-processing) as shown in **1012**. The regularization points are also added, forcing the solution to take specific values at these points. The goal of the loss function is to assign a "score" to how well the potential solution (parametrized by the variational angles $\theta$) satisfies the differential equation, matching derivative terms and the function polynomial to minimize the loss.

With the aim to increase the score (and decrease the loss function), also the gradient of the loss function **1012** may be computed with respect to variational parameters $\theta$. Using the gradient descent procedure (or in principle any other classical optimization procedure **1014)** the variational angles may be updated from iteration $n_j = 1$ into the next one $n_j + 1$ in step **1016,** and the steps outlined before may be repeated until the exit condition is reached. The exit condition may be chosen as: 1) the maximal number of iterations $n_{iter}$ reached; 2) loss function value is smaller than pre-specified value; and 3) loss gradient is smaller than a certain value. Once we exit the classical loop, the solution is chosen as a circuit with angles $\theta_{opt}$ that minimize the loss. Finally, the full solution may be extracted by sampling the circuit shown in **Fig. 7** at **710**.

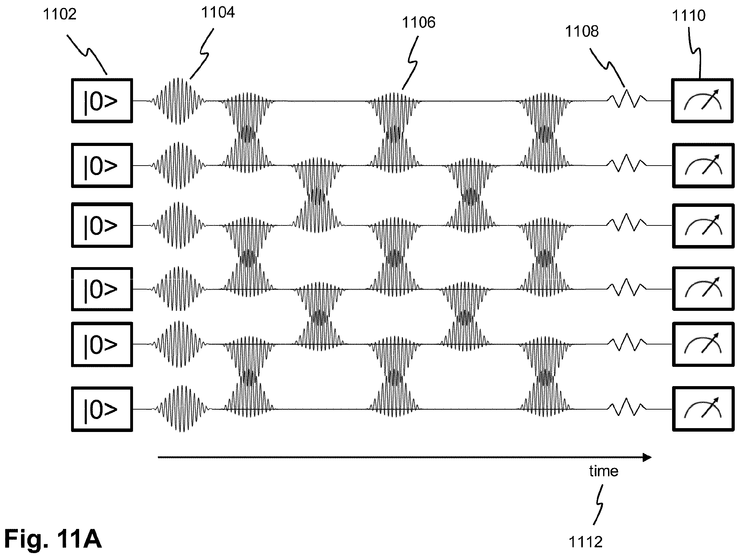

**Fig. 11A** is a hardware-level schematic of the actions effectuating the logical operations shown in circuit diagrams such as **Fig. 7**. The ansatz unitaries **702,** the variational unitaries **706,716,** and the transformation unitaries **712** can be decomposed into a sequence of logical gate operations. These logical gate operations are transformations in the quantum Hilbert space over the qubits. In order to transform the internal states of these qubits, a classical control stack may be used to send pulse information to a pulse controller that affects one or more qubits. The controller may send a sequence of such pulses in time and for each qubit independently. An initialization pulse is used to initialize the qubits into the $|0\rangle$ state **1102**. Then, for example, a series of single-qubit pulses **1104** is sent to the qubit array. This series of single-qubit pulses may apply a single-layer feature map. Two-qubit pulse sequences can be used to effectively entangle multiple qubits **1106**. The duration, type, strength, and shape of these pulses determine the effectuated quantum logical operations. **1108** indicates a 'break' in the depicted timeline, which means that the sequence of gates may be repeated in a similar fashion in the direction of the time axis **1112**. At the end of the pulse sequences, the qubits may be measured **1110**.

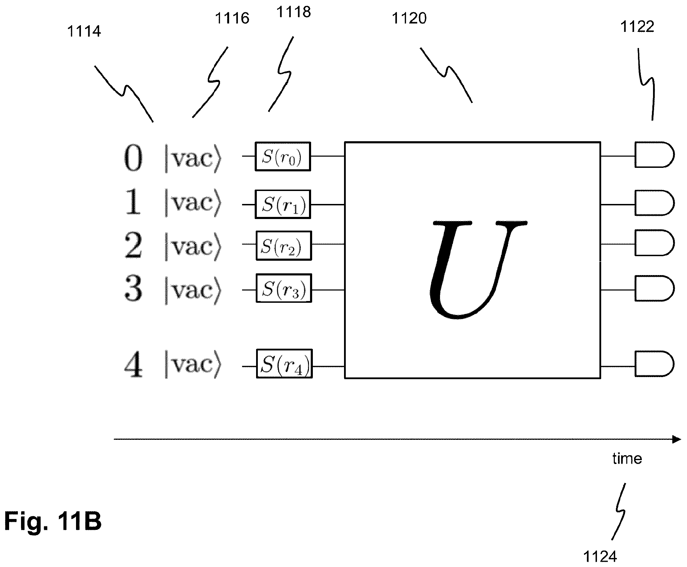

**Fig. 11B** is a hardware-level schematic of the actions effectuating the logical operations shown in circuit diagrams such as **Fig. 7**, specified for a photonic/optical quantum processor. The ansatz unitaries **702,** the variational unitaries **706,716,** and the transformation unitaries **712** can be decomposed into a sequence of optical gate operations. These logical gate operations are transformations in the quantum Hilbert space over the optical modes. In order to transform the internal states of these modes, a classical control stack may be used to send pulse information to a pulse controller that affects one or more modes. The controller may formulate the programmable unitary transformations in a parameterized way.

Initially the modes **1114** are all in the vacuum state |vac⟩ **1116,** which are then squeezed to produce single-mode squeezed vacuum states **1118.** The duration, type, strength and shape of controlled-optical gate transformations determine the effectuated quantum logical operations **1120.**

At the end of the optical paths, the modes may be measured with, e.g., photon-number resolving, Fock-basis measurement **1122,** tomography or threshold detectors.

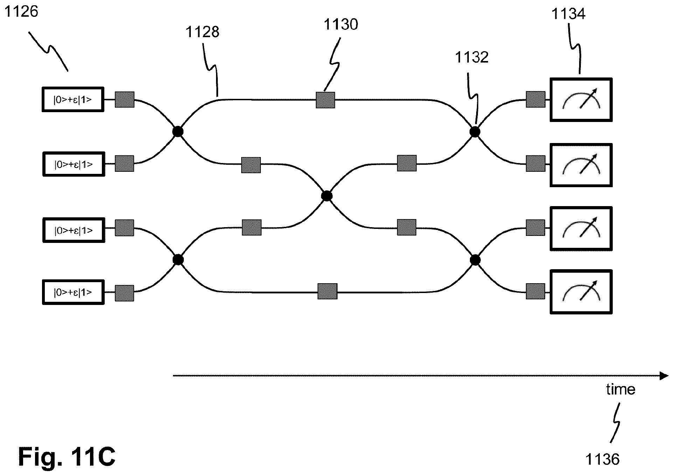

**Fig. 11C** is a hardware-level schematic of the actions effectuating the logical operations shown in circuit diagrams such as **Fig. 7,** specified for a Gaussian boson sampling device. The ansatz unitaries **702,** the variational unitaries **706,716,** and the transformation unitaries **712** can be decomposed into a sequence of optical gate operations. These logical gate operations are transformations in the quantum Hilbert space over the optical modes. In order to transform the internal states of these modes, a classical control stack may be used to send information to optical switches and delay lines. The controller may formulate the programmable unitary transformations in a parameterized way.

Initially the modes **1126** are all in a weak coherent state, which mostly vacuum with a chance of one or two photons and negligibly so for higher counts. Then, the photons travel through optical waveguides **1128** through delay lines **1130** and two-mode couplers **1132** which can be tuned with a classical control stack, and which determines the effectuated quantum logical operations.

At the end of the optical paths, the modes may be measured with photon-number resolving **1134,** or threshold detectors.

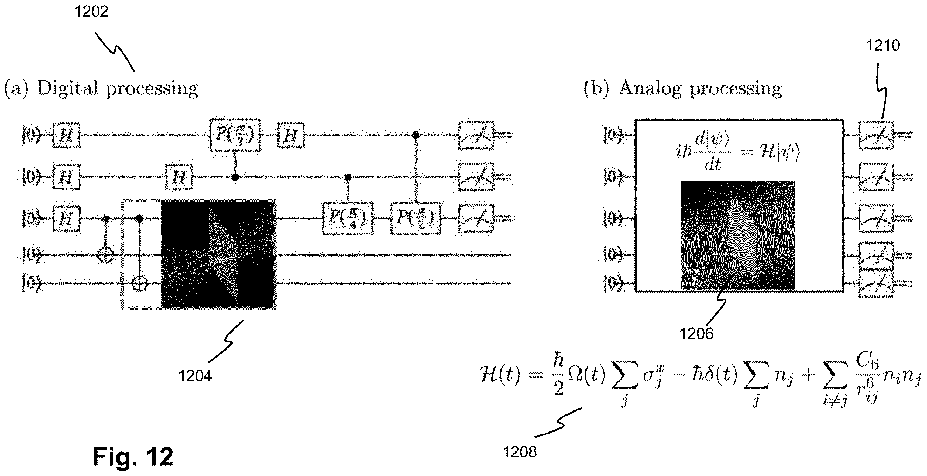

**Fig 12** is a hardware-level schematic of the actions effectuating the logical operations shown in circuit diagrams such as **Fig. 7,** specified for a neutral atom based quantum device. The ansatz and variational unitaries can be decomposed into two different kinds of operations on this hardware type: digital or analog. Both of these kinds of operations are transformations in the quantum Hilbert space over the atomic states.

In the digital mode, laser pulses are used to effectuate transitions between atomic states which effectively implement sets of standardized or 'digital' rotations on computational states. These digital gates include any single-qubit rotations, and a controlledpauli-Z operation with arbitrary number of control qubits.

In the analog mode, laser light is applied to groups of, or all, atoms at the same time, with certain properties like detuning, Rabi frequencies and Rydberg interactions effectively driving Hamiltonian evolution of the atomic array in an analog way. The combined quantum wavefunction evolves according to Schrodinger's equation, and particular unitaries $U = e^{-iHt}$ can be designed by pulse-shaping the parameterized coefficients of the Hamiltonian in time. This way, a parametric analog unitary block can be applied, which entangles the atoms and can act as a variational ansatz.

The digital and analog modes can be combined or alternated, to yield a combination of the effects of each.

In order to transform the internal states of these modes, a classical control stack can be used to send information to optical components and lasers. The controller may formulate the programmable unitary transformations in a parameterized way.

At the end of the unitary transformations, the states of the atoms are read out by applying measurement laser pulses, and then observing the brightness using a camera to spot which atomic qubit is turned 'on' or 'off', 1 or 0. This bit information across the array is then processed further according to embodiments of this invention.

As was explained above, the DQGM model can be characterised by

$$\tilde{p}_{\boldsymbol{\theta}}(x) = \mathrm{tr}\{\hat{C}_{\varnothing}\,\widehat{U}_{\boldsymbol{\theta}}\,\widehat{\mathcal{U}}_{\varphi}(x)\hat{\rho}_0\,\widehat{U}_{\varphi}^{\dagger}(x)\widehat{U}_{\boldsymbol{\theta}}^{\dagger}\}. \tag{17}$$

Thus, in order to differentiate the model with respect to $x$, the derivative $\mathrm{d}\tilde{p}_{\theta}(x)/\mathrm{d}x$ is preferably determined analytically. To this end, it may be observed that

$$\frac{\mathrm{d}\widehat{\mathcal{U}}_{\varphi}(x)}{\mathrm{d}x} = -i\,\widehat{M}_x\,\widehat{\mathcal{U}}_{\varphi}(x), \tag{18}$$

wherein the operator $\widehat{M}_x := \pi \sum_{j=1}^{N} \hat{X}_j / 2^j$ is the generator of the phase map. This generator commutes trivially with the phase map, $[\widehat{M}_x, \widehat{\mathcal{U}}_{\varphi}(x)] = 0\ \forall\ x$. Although $\hat{M}_x$ is non-unitary, it can still be applied to the computational

zero as $\widehat{M}_x|\emptyset\rangle \propto \sum_{j=1}^N |j\rangle/2^j$, generating a 'one-hot' state with single excitation. A normalization prefactor $\mathcal{N}_{\mathcal{M}}$ may be defined such that $(\mathcal{N}_{\mathcal{M}}^{-1})\,\widehat{M}_x|\emptyset\rangle$ is a valid quantum state. Furthermore, as was explained above,

$$\hat{C}_\emptyset = \hat{\rho}_0.$$

.

Using these observations, the full model may be differentiated, resulting in

$$\frac{\mathrm{d}\tilde{p}_\theta(x)}{\mathrm{d}x} = i\,\mathrm{tr}\{\hat{\rho}_0 \widehat{U}_\theta \widehat{U}_\varphi(x)\widehat{M}_x\hat{\rho}_0 \widehat{U}_\varphi^\dagger(x)\widehat{U}_\theta^\dagger\} - i\,\mathrm{tr}\{\hat{\rho}_0 \widehat{U}_\theta \widehat{U}_\varphi(x)\hat{\rho}_0 \widehat{M}_x \widehat{U}_\varphi^\dagger(x)\widehat{U}_\theta^\dagger\}, \qquad (19)$$

changing the order in which $\widehat{M}_x$ acts on $\hat{\rho}_0$. The corresponding measurement of two overlaps can be combined into the measurement of the expectation value

$$\frac{\mathrm{d}\tilde{p}_\theta(x)}{\mathrm{d}x} = \mathrm{tr}\{(\delta_1\hat{C})\widehat{U}_\theta \widehat{U}_\varphi(x)\hat{\rho}_0 \widehat{U}_\varphi^\dagger(x)\widehat{U}_\theta^\dagger\}, \qquad (20)$$

where

$$\delta_1\hat{C}$$

defines a new differential cost operator

$$\cdot\,\delta_1\hat{C} := i\,\widehat{M}_x\hat{C}_\emptyset - i\,\hat{C}_\emptyset\,\widehat{M}_x.$$

This differential cost operator can be rewritten as

$$\delta_1\hat{C} = \pi \sum_{j=1}^N \frac{1}{2^j}\,\widehat{Y}_j \otimes |\emptyset\rangle_{\bar{J}}\langle\emptyset|, \qquad (21)$$

where the state $|\emptyset\rangle_{\bar{J}}\langle\emptyset|$ means a computational zero state for the register of $N$ - 1 qubits, apart from the $j$th one.
Thus, $N$ evaluations of the expectation value are needed. This is an improvement over $2N$ evaluations for the parameter shift rule. Analysing the commutators in

$$\delta_1\hat{C}\,\uparrow$$

that correspond to SWAP-like operators, this may possibly be further improved.
Similarly, a second-order derivative for the quantum probability distribution may be derived. To this end, the expression in Eq. (21) may be differentiated, so that $\mathrm{d}^2\tilde{p}_\theta(x)/\mathrm{d}x^2$ can be written as an expectation value

$$\frac{\mathrm{d}^2\tilde{p}_\theta(x)}{\mathrm{d}x^2} = \mathrm{tr}\{(\delta_2\hat{C})\widehat{U}_\theta \widehat{U}_\varphi(x)\hat{\rho}_0 \widehat{U}_\varphi^\dagger(x)\widehat{U}_\theta^\dagger\}, \qquad (22)$$

where

$$\delta_2 \hat{C}$$

introduces another Hermitian operator

$$\delta_2 \hat{C} := 2 \, \hat{M}_x \hat{C}_\emptyset \hat{M}_x - \hat{M}_x \hat{C}_\emptyset - \hat{C}_\emptyset \, \hat{M}_x, \tag{23}$$

which can be decomposed into $O(N^2)$ non-commuting terms that can be measured separately.

In general, it is unlikely that sampling from a univariate distribution using a quantum computer gives a tangible advantage over using a classical computer. In the end, for most practical cases a finite-degree polynomial approximation can be used, for example - as commonly used in financial analysis. Yet, when working with multivariate (multidimensional) distributions, sampling becomes more complicated. There is therefore a need for solutions when working with a vector of stochastic variables $X = (X_1, X_2, ..., X_d)$ that becomes a d-dimensional vector (with d > 1). The underlying probability distribution corresponds to $p(x)$ with $x = (x_1, x_2, ..., x_d)$, and often, it is convenient to work with a multivariate cumulative distribution function $F(x)$. If the distributions are not correlated, inverse sampling may be performed, assuming that the multivariate CDF factorizes into a product of marginal distributions, $F_{simple}(x) = F_1(x_1) \cdot F_2(x_2) \cdots F_d(x_d)$, and the same is true for the probability density function. This means, even though multivariate distributions are being considered, the cost is effectively similar to that of univariate case and an advantage of quantum computing is unlikely.

However, for *correlated* variables this 'decoupling' procedure is not valid. For example, imagine a bivariate distribution such that two stochastic variables $X_1$ and $X_2$ are distributed normally, but are in fact correlated. The correlation for normal distributions can be accounted for using a correlation matrix, which grows with the dimension d. Thus, accounting for correlations becomes challenging for generic d-dimensional distributions. However, this problem can be resolved by introducing a copula - a function that links marginal distributions of different variables. Copulas absorb correlations between variables while being agnostic to the types of distributions. Specifically, following the Sklar's theorem, a copula $C[v]$ acting on some vector $v$ may be written as a function

$$F(x) = C[F_1(x_1), F_2(x_2), ..., F_d(x_d)], \tag{24}$$

which links marginals into a full multivariate CDF. Similarly, a copula density function c[x] can be written as

$$c[x] = c[F_1(x_1), ..., F_d(x_d)] \, p_1(x_1) \cdot ... p_d(x_d). \tag{25}$$

The useful property of copulas is that by generating a vector of samples from the copula as $U = (U_1, U_2, ..., U_d) \sim C$, they can be transformed into samples of the original multivariate distribution as

$$X = \big(Q_1(U_1), Q_2(U_2), ..., Q_d(U_d)\big), \tag{26}$$

where $Q_j(U_j)$ are marginal quantile functions (inverted CDFs) for distributions of a $j^{th}$ component.

A way for including correlations between stochastic variables can be provided by quantum hardware, as quantum systems are good at correlating subsystems. Generative modelling may benefit from correlation, and specifically entanglement. This may use, for example, a joint register for the vector of variables x. However, for, e.g., QCBM-type problems, the enlarged size can become problematic as the training for large d can become prohibitive.

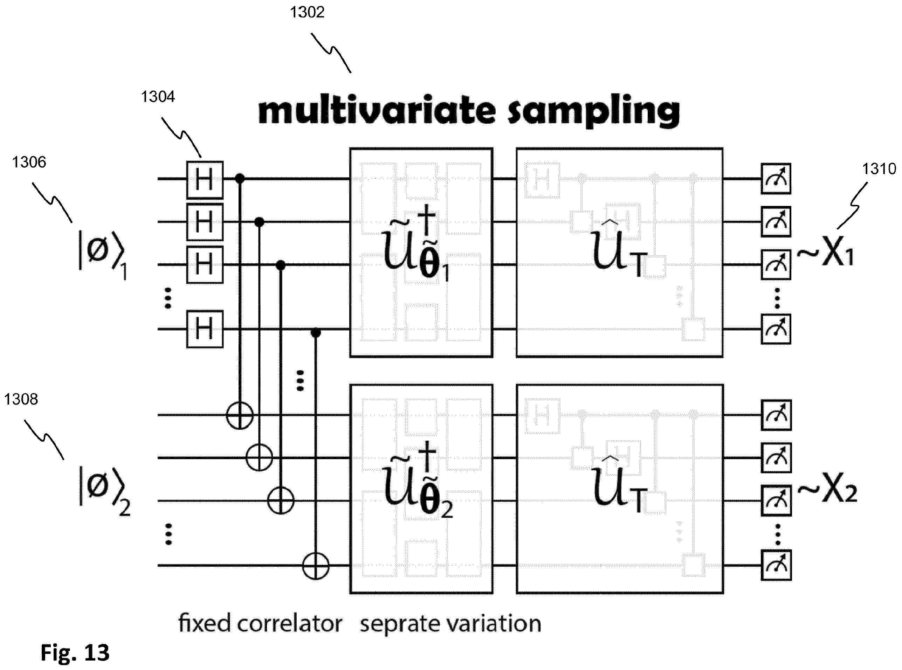

A more subtle way corresponds to including correlations by encoding copulas into a quantum hardware. A copula is a multivariate cumulative distribution function for which the marginal probability distribution of each variable is uniform on the interval [0, 1].. Since the copulas model only correlations, while having flat marginals, they can be modelled by entangled states. For example, the correlations can be introduced as a quantum circuit of finite depth that is applied *prior* to separate variational registers (see **Fig. 13**). Yet, when $K$ registers are linked, even for tractable $N$-wide individual distributions, $K \cdot N$ qubits are needed that are maximally entangled in the logical sense. As a cluster state is formed, this requires the bond dimension to go up, and at certain point even tensor train decomposition will not be efficient. This is the setting in which we expect to get an advantage in quantum generative modelling.

**Fig. 13** shows a schematic depiction of a quantum circuit used to represent a quantum copula as DQGM for multivariate sampling **1302**. Separate registers for each dimension **1306,1308** are allocated. Entanglement between the registers is enabled **1304** to induce quantum correlations between the stochastic variables. Sampling at the output leads to correlated samples **1310** as desired.

The method is further illustrated with reference to the following numerical experiments. For these experiments, an Ornstein-Uhlenbeck process was chosen as an underling model. The Ornstein-Uhlenbeck process is a relatively simple stochastic process that lies at the core of many physical and financial models. For example, being a starting point for the Hull-White and Vasicek models, it is used for currency exchange rate modelling, and it represents a commonly used model for benchmarking quantum algorithms.

First, the application pf the method on learning a static distribution is shown, together with benchmark frequency-taming techniques. Second, differential constraints are introduced and the steady-state Fokker-Planck equation is solved for the Ornstein-Uhlenbeck process. Third, the learnt solution is evolved in time, specifically solving the Kolmogorov backward equation for the Ornstein-Uhlenbeck process.

A normal distribution is represented and sampled by a DQGM circuit and, for comparison, by a by QCBM circuit. A target distribution corresponding to a normal process is selected (of which the Ornstein-Uhlenbeck process is an example). The corresponding probability density function (PDF) reads

$$p_{\text{target}}(x) = \frac{1}{\sqrt{2\pi\sigma_0^2}}\exp\left[-\frac{(x-\mu_0)^2}{2\sigma_0^2}\right], \tag{27}$$

where $\mu_0$ is a mean and $\sigma_0^2$ is a variance. To load the probability density function in a quantum register, parameters shall be chosen such that the probability density function matches the probability distribution; that is, $\mu$ and $\sigma$ should be chosen such that the probability distribution can be stored in a register with $x \in [0,2^N - 1)$ and $0 \leq p(x) \leq 1$. In these examples, a mean square error (MSE) is chosen as the loss metric, which is normalized by the number of samples at which distributions are compared. As a testing ansatz, a hardware efficient ansatz (HEA) [50] with alternating

$$\mathcal{SU}(2)$$

rotations and entangling layers is used. Variation is performed using a gradient-based Adam optimizer, and Julia's Yao package is used as a simulator.

To showcase the peculiarities of DQGM and QCBM training, a system with $N = 4$ registers is used. To understand the capabilities for learning a suitable generative model (probability distribution), the mean $\mu$ is fixed to the middle of the interval and the standard variation $\sigma$ is set to $\sigma = 3$. The DQGM is trained on $X$ with 161 equally distributed points, until convergence, using corresponding probabilities. The QCBM is trained for all digital points, and the figures show plots using the full model based on the generalized QCBM distribution.

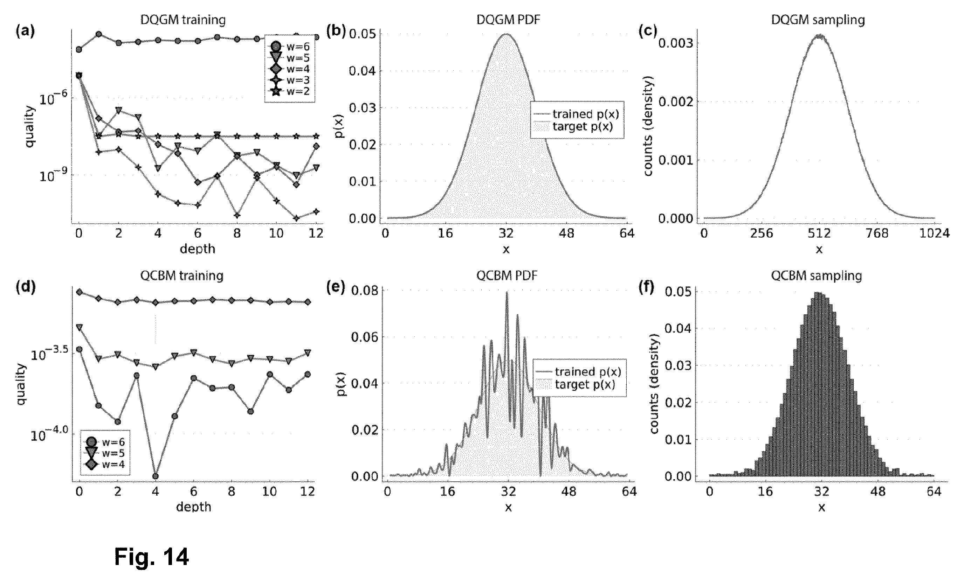

We start by considering a target distribution with $N = 6$ qubits. We set the mean to 32 and the standard deviation of sigma_0 = 8. The training grid is set up to include all integer points of x, and use a thousand of epochs. The training is performed for varying depth and width. We test the performance of both DQGM and generalized QCBM for modelling the target as well as providing samples. As a metric, we plot the quality of solution, being the MSE loss evaluated for twenty times more points. The results are show in **Fig. 14** In **Fig. 14a** we show the quality of solution for DQGM in the end of training. We observe that at full width training the model contains an exponential number of frequencies, limiting the performance due to large 'out-of-sample' error. At the same time, for smaller width we can capture the target distribution using lower frequency components, and reach high quality solutions. While the performance is likely to be model dependent, we observe that the optimal solution requires choosing a suitable combination of circuit width w and depth d. As an example of trained PDF we pick d=4 and highest-performing width of w=3. The trained DQGM closely follows the target model at all points [see **Fig.14b**]. We then apply the basis transformation and sample our model with the extended register of M = 10 qubits. The histogram is shown in **Fig14c** where 10^7 shots are used, and we normalize bins over the total number of samples.

Next, for comparison we consider the performance of generalized QCBM for the same problem. The results for d and w scanning are depicted in **Fig.14d.** As encoding assumes transformations on bitstrings, smaller w circuits do not perform well, and w=N is required, as expected. We note that the presence of high frequencies in the model and absence of generalization that limits high frequency components generally impacts the QCBM's performance. The instance with the best quality is shown in **Fig.14e.** While overall shape represents the distribution well, high-frequency component impact the model quality as it does not generalize. For instance, the impact on solving differential equations based on such a model will be tremendous. This can traced directly to the exponential capacity of the phase feature map, and the absence of simple frequency-taming. One option for regularization here is including more points during training, but this comes at the price of training at dense grids. Finally, we show the sampling from generalized QCBM in Fig.14f. The histogram qualitatively matches with the target, as requested by optimization loss.

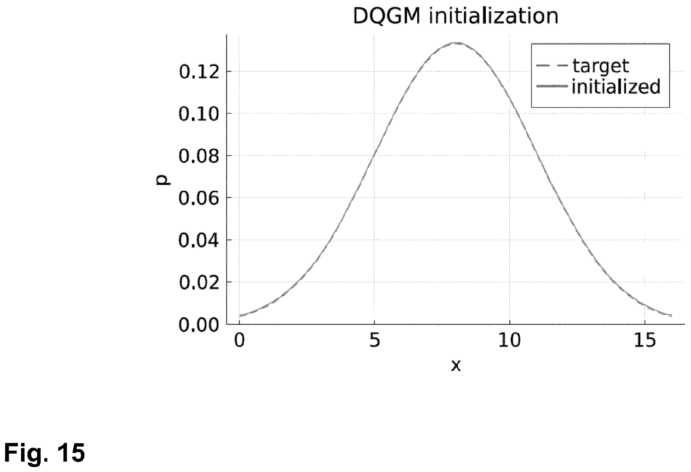

Following the use of the variational approach, we have also implemented the initialization procedure. In this case the target distribution is expanded in cosine series for 4 qubits, such that the coefficients of the preparation state are known. Using a SO(2^4) circuit that can create an arbitrary real-amplitude state, we efficiently utilize all frequencies. The resulting PDF is shown in **Fig.15** We note that initialization may be required in cases where we want to off-load part of job from the variational procedure.

We proceed introducing the differential constraints, where together with learning from data by minimizing $\mathcal{L}_\theta^{\text{data}}$, we wish to minimize $\mathcal{L}_\theta^{\text{data}}$ coming from the FPE differential operator. While the data-based learning does not require knowing the model parameters per se, the SDE/PDE/ODE learning does depend on the model parameters introduced by the drift and diffusion terms. We again choose the Ornstein-Uhlenbeck process as it lies at the core of many financial models. SDE of the OU process corresponds to static drift and diffusion terms, and reads

$$\mathrm{d}X_t = -v(X_t - \mu)\,\mathrm{d}t + \sigma\,\mathrm{d}W_t, \qquad (28)$$

where $\mu$, $\sigma$, and v are model parameters, which can be discovered while learning from data. Using Eq. (9) we can see that at the steady state Fokker-Planck equation for the Ornstein-Uhlenbeck process corresponds to

$$v\,p(x, t_{\mathrm{s}}) + v(x - \mu)\frac{\mathrm{d}}{\mathrm{d}x}p(x, t_{\mathrm{s}}) + \frac{\sigma^2}{2}\frac{\mathrm{d}^2}{\mathrm{d}x^2}p(x, t_{\mathrm{s}}) = 0. \qquad (29)$$

Notably, when starting from some initial mean, this procedure results in $\mu$ as a new mean in the steady state (at the rate of v), and a variance $\sigma^2/v$. It is convenient to set v = 1, assuming that time is in units of $v^1$.

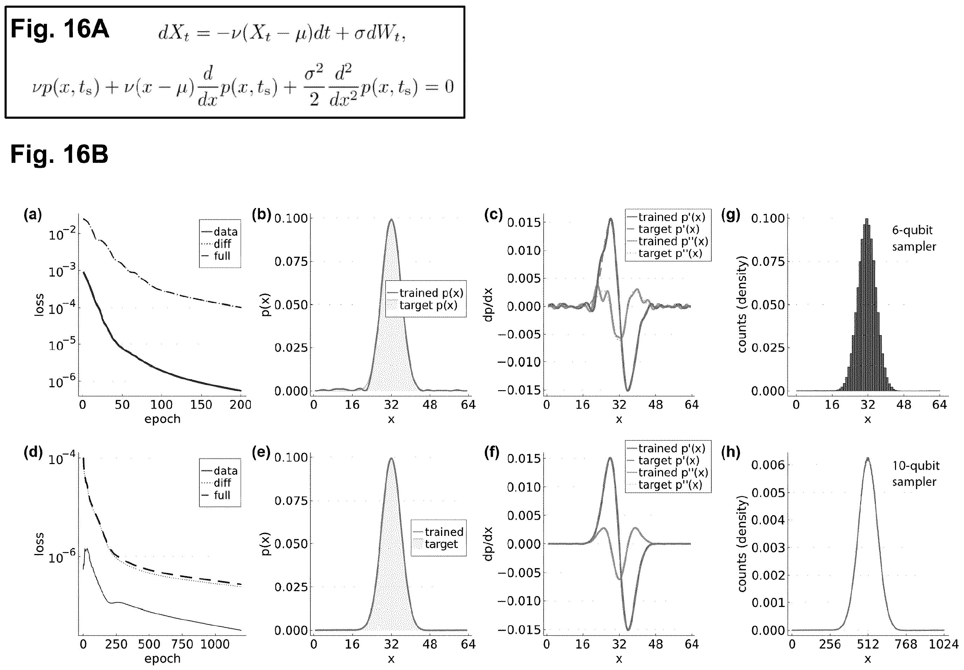

**Fig. 16A** shows the specific form of a stochastic differential equation known as the Ornstein-Uhlenbeck process (defined in eq. (28) above), and the stationary Fokker-Planck equation (defined in eq. (29) above) that is associated with the time-dependent Ornstein-Uhlenbeck.

The Ornstein-Uhlenbeck process with differential constraints may be solved using the following method steps.

In this example, the Ornstein-Uhlenbeck parameters $\mu$ = 8 and $\sigma = \sqrt{2}$ are used. A N = 4 qubit register is used for training the latent model, and a full $N_s$ = 8 register is used for the refined quantum sampling. The ansatz is the HEA with d = 4, w = $N$, and 81 points are used for training. Initially, the loss is biased towards a data-based contribution, where DQGM aims to learn initial conditions. We use Adam for 1250 epochs at learning rate of 0.005 (a random seed is 12345).

**Fig. 16B** shows numerical results showing the effect of using differential constraints while training the DQGM for the Ornstein-Uhlenbeck process. In particular, **Fig. 16B(a)-(c)** show results where the DQGM is trained only on data, while in **Fig. 16B(a)-(c),** the DQGM is trained additionally on the stationary FPE differential constraint. **Fig. 16B(a)** show the history of data training, including the data loss (used for optimization), differential loss and the full weighted loss (plotted for scoring). Notably, using these choices, DQGM learns well to reproduce the required distribution, but does not capture the second-order derivative for the model.

This can be solved by including the differential constraints. Another stage of 1250 epochs (learning rate 0.002) leads to a marked improvement of the differential loss $\mathcal{L}_{\theta_{\mathrm{opt}}}^{\text{diff}}$. **Fig. 16B(d)** shows the history for the full loss training with differential constraints, where the full weighted loss is used for optimization, and the other two loss functions are plotted for scoring.

**Fig. 16B(b),(e)** respectively show the DQGM, probability density function evaluated, trained with only data and with additional differential constraint. **Fig. 16B(c),(f)** respectively show the derivative of the DQGM, trained with only data and with additional differential constraint. While the model may slightly deviate, visually, from the ideal normal shape **[Fig. 16B(c)],** the trained latent distribution $\tilde{p}_{\theta_{\mathrm{opt}}}(x, t_{\mathrm{s}})$ has derivatives that are close to the sought ones **[Fig. 16B(d)],** meaning that we faithfully reproduce the physics of the Ornstein-Uhlenbeck process, and not merely fit data. This point is important for further propagation.

**Fig. 16B(g),(h)** show the resulting sampling histograms, applying the basis transformation and projective measurements on the trained register N = 4 ($10^6$ samples), and extending it to $N_s$ = 8 qubits ($10^7$ samples), respectively. The

latter shows the power of the method according to this disclosure as a high quality distribution can be obtained, matching also the tails of Ornstein-Uhlenbeck distribution well.

Once the initial state is learnt and differential constraints are accounted for, the model may be used to predict the trajectories of the stochastic process that lead to the steady state.

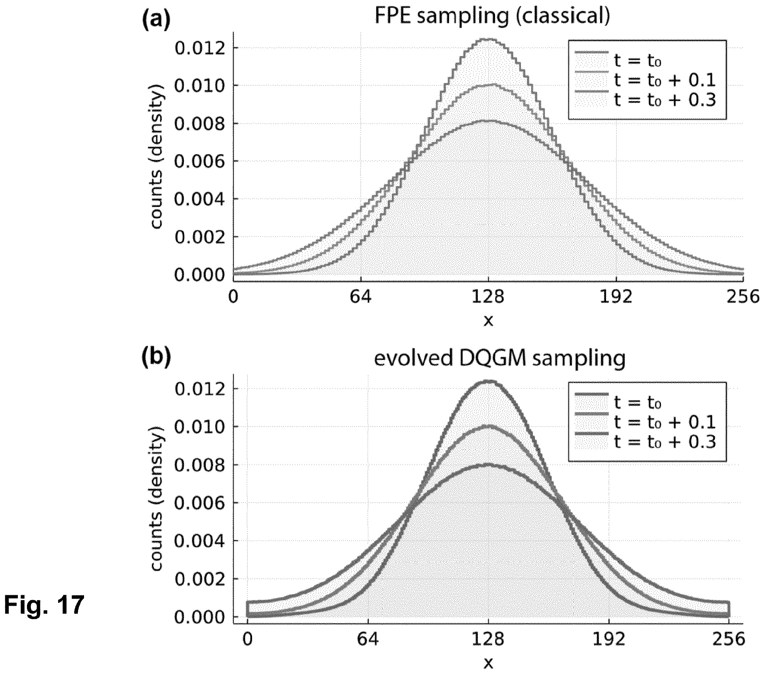

**Fig. 17a** shows a comparions between classical Euler-Maruyama solving of the FPE compared to using DQGM in **Fig. 17b**

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A method for training and sampling a generative model using a hybrid data processing system comprising a classical computer and a quantum processor, the method comprising:

   receiving by the classical computer a set of information about a stochastic process, including samples (data) and/or parametric analytical function or parametric (implicit) distribution function, preferably the distribution function defining a probability density function (PDF) in one or more dimensions, parametrized by a variable $x$ and, optionally, one or more further parameters, such as time;
   executing by the classical computer a training process for training a quantum neural network (QNN) to model a probability density function, the training data including measurements of the stochastic process and/or functional descriptions of the distribution, the QNN including a feature map for encoding a variable $x$ of the distribution function, a variational circuit associated with variational parameters, and a cost function for determining the output of the QNN; and,
   executing by the classical computer a sampling process using a parametrized quantum circuit for the one or more parametric dimensions, the sampling process including generating samples of the modelled stochastic process, the parameterized quantum circuit comprising the inverse of the variational circuit of the trained QNN, a unitary transformation, preferably a quantum Fourier transform circuit, associated with the type of feature map used in the training phase, and a quantum register, wherein the quantum register is measured in the computational basis, yielding bitstrings as measurement results, each bitstring representing a sample from the modelled stochastic process.

2. A method according to claim wherein the distribution function describes the outcomes of a stochastic process modelled by a Stochastic Differential Equation (SDE) in one or more dimensions.

3. A method according to claims 1 or 2 wherein the training process includes:
   minimizing a loss function on the basis of the measured expectation value of the cost function by variationally tuning the variational parameters and repeating execution of quantum gate operations associated with the variational circuit and measurement of the output of the quantum computer as an expectation value of the cost function until convergence criteria are met, the expectation value of the cost function defining a trial function.

4. The method according to any of claims 1-3 wherein the training process includes:

   receiving or determining, by the classical computer system, a formulation of quantum circuits representing the parametric probability density function;
   executing, by the quantum processor, the quantum circuits for a set of points $z_j$ in the variable space $x$ of the PDF;
   receiving, by the classical computer system, in response to the execution of the quantum circuits quantum, hardware measurement data; and,
   determining, by the classical computer system, based on the quantum hardware measurement data and a loss function, if the quantum hardware measurement data forms an accurate representation of the PDF, given the data and/or (differential) constraints on the PDF.

5. The method according to claim 4 wherein the quantum circuits is parametrized by at least one continuous-variable $x$ associated with the stochastic process $X$ through its PDF description, and the quantum circuits including one or more function circuits for determining one or more trial functions values $p(x_j)$ around one more points $x_j$ and one or more differential function circuits for determining one or more trial derivative values, preferably one or more first order trail derivative and one or more second order trail derivatives, around the one or more points $x_j$.

6. The method according to claims 4 or 5 wherein the training process includes solving a stationary or non-stationary FPE-PDE associated with a general SDE, based on differentiable quantum circuits DQCs, the differentiable quantum circuits including a first feature map quantum circuit which is a function of a differentiable variable $x$ of the FPE, and a quantum circuit representing a variational ansatz.

7. The method according to any of claims 4- 6 wherein the determining if the quantum hardware measurement data forms a representative description of the stochastic process in the form of a PDF is further based on one or more differential constraints associated with the one or more SDEs, boundary conditions or probability density function properties, including, e.g., stationarity, convexity, tail shapes, etc.

8. The method according to any of claims 4-7 wherein executing the quantum circuits includes: translating each of the quantum circuits into a sequence of signals and using the sequence of signals to operate qubits of the quantum computer; and/or, wherein receiving hardware measurement data includes: applying a read-out signal to qubits of the quantum computer and in response to the read-out signal measuring quantum hardware measurement data.

9. The method according to any of claims 1-8 wherein the one or more quantum neural networks for modelling the probability density function includes gate-based qubit devices, digital/analog quantum devices, neutral-atom-based quantum devices, optical qubit devices and/or gaussian boson sampling devices.

10. The method according to any of claims 1-9 wherein, after the training process has been completed, a sampling phase starts, the sampling phase including: a sampling circuit is formulated based on the trained parameters and an inverse transformation circuit associated with the feature map used in the training process; the sampling circuit being executed on the quantum hardware device for generating samples in the discrete/bit-basis.

11. The method according to claims 1-10 wherein, the training process and sampling process are executed in different operational modes on the same quantum processor; or, separately on distinct quantum processors, to optimize the sampling speed in the sampling phase for rapid generative modelling.

12. The method according to claims 1-11 wherein, the stochastic process involves one or more than one stochastic variables, preferably the more than one stochastic variables being correlated; one or more quantum feature maps are used to map each stochastic variable dimension to the quantum latent state space in the training phase, and to distinct quantum registers in the sampling phase.

13. The method according to claims 1-12 wherein frequency taming and loading techniques are applied in the latent space representation of the probability density functions on the quantum circuits; the frequency taming techniques including one or more of the following components: qubit-wise learning, Fourier initialization, feature map sparsification, and multidimensional correlation.

14. The method according to any of claims 1-13 wherein the feature map is differentiated using circuit differentiation rules, including parameter shift rules but preferably using optimized phase feature map differentiation yielding half the number of evaluations or less depending on commutators.

**15.** The method according to claims 1-14 wherein the trained latent-space representation of the probability distribution is maximized in an extremal-learning setting.

**16.** Method according to any of claims 1-15 wherein the SDE defines a reverse-time SDE, or backward SDE, or forward SDE, or reverse-time backward SDE.

**17.** A system for training and sampling a generative model, preferably associated with one or more stochastic differential equations, SDEs, using a hybrid data processing system comprising a classical computer system and a special purpose processor, wherein the system is configured to perform the steps of:

receiving by the classical computer a set of information about a stochastic process, including samples (data) and/or parametric analytical function or parametric (implicit) distribution function, preferably the distribution function defining a probability density function (PDF) in one or more dimensions, parametrized by a variable $x$ and, optionally, one or more further parameters, such as time;

executing by the classical computer a training process for training a quantum neural network (QNN) to model a probability density function, the training data including measurements of the stochastic process and/or functional descriptions of the distribution, the QNN including a feature map for encoding a variable x of the distribution function, a variational circuit associated with variational parameters, and a cost function for determining the output of the QNN; and,

executing by the classical computer a sampling process using a parametrized quantum circuit for the one or more parametric dimensions, the sampling process including generating samples of the modelled stochastic process, the parameterized quantum circuit comprising the inverse of the variational circuit of the trained QNN, a unitary transformation, preferably a quantum Fourier transform circuit, associated with the type of feature map used in the training phase, and a quantum register, wherein the quantum register is measured in the computational basis, yielding bitstrings as measurement results, each bitstring representing a sample from the modelled stochastic process.

**18.** A system for training and sampling from a generative model, preferably associated with one or more stochastic differential equations, SDEs, using a hybrid data processing system comprising a classical computer system and a special purpose processor, wherein the system is configured to perform any of the steps according to claims 1-16.

**19.** A computer program or suite of computer programs comprising at least one software code portion or a computer program product storing at least one software code portion, the software code portion, when run on a hybrid data processing system comprising a classical computer system and a quantum processor, being configured for executing the method steps according any of claims 1-16.

Dataset D = [1.4, 2.9, -3.7, ...]

$M(\theta)$

$M(\theta_{\mathrm{opt}})$

102

104

106

Fig. 1

Fig. 2

**Fig. 3**

EP 4 224 378 A1

Fig. 4

**generator** 502

$\hat{U}_\varphi(z)$  $\hat{U}_\theta$

510

generated sample

$$x \sim p_{\text{data}}(x) \;\|\; \{x_{\text{data}}\}$$

real sample

506

**discriminator** 604

$\hat{U}_\varphi(x)$  $\hat{U}_\theta$

probability
(true/false)

508

**Fig. 5**

Receive input information representing a data set of samples and/or an explicit or implicit distribution function
602

Receive assumptions, preferably differential constraints, associated with the probability density function underlying the received data (e.g., SDE or misc.)
604

Formulate quantum circuit structure -> FM, Ansatz, Cost function (of specific type), to represent pdf(x) as a quantum model
606

define loss function, parametrized by ansatz parameters, based on difference between input information and suggested model
608

Training: minimize loss function w.r.t. ansatz parameters
610

Use optimized ansatz parameters in a sampling phase circuit setting including a transformation circuit based on the feature map used
612

Generate samples from the quantum model by sampling from the output of the sampling phase circuit
614

**Fig. 6**

**Fig. 7**

EP 4 224 378 A1

EP 4 224 378 A1

**qubit-wise training** 802

training stage 1 804  stage 2 806  ...

$\hat{U}_\varphi(x)$  $\hat{U}_\theta^{(1)}$  $\hat{U}_\theta^{(2)}$

$|\varnothing\rangle$

**Fig. 8A**

**Fourier initialization** 812

$\hat{U}_\varphi(x)$  $\hat{U}_{init}$  L

$|\varnothing\rangle$

**Fig. 8B**

**feature map sparsification**

Fig. 9A

Fig. 9B

training → sampling

EP 4 224 378 A1

$1016 \; \vec{\theta} \to \overrightarrow{\theta'}$

for $x_j$ in $X$: 1006

| Quantum Feature Map Circuit $x_j$ 1007 | Quantum Variational Ansatz Circuit $\vec{\theta}$ 1008 | Measure $\langle C(x,\theta) \rangle$ $x \mapsto x_j$ 1010 |

Classical calculation of the loss function from $\langle C(x,\theta) \rangle$ and derivatives 1012

Optimization algorithm 1014

$\{\vec{\theta}, u(x, \vec{\theta})\}$

| Derivative Feature Map Circuits $x_j$ 1011 | Quantum Variational Ansatz Circuit $\vec{\theta}$ 1008 | Measure $d\langle C(x,\theta) \rangle/dx$ $x \mapsto x_j$ 1010 |

...

1009

1004

1006

1002

**Fig. 10A**

$|0\rangle$

$|0\rangle$ 1021 1025 1022 $|0\rangle$

$|0\rangle$ $|0\rangle$

$|0\rangle$

1018

1024

**Fig. 10B**

1020

1023

36

Fig. 11A

EP 4 224 378 A1

Fig. 11B

Fig. 11C

1126

1128

1130

1132

1134

$|0\rangle+\varepsilon|1\rangle$

$|0\rangle+\varepsilon|1\rangle$

$|0\rangle+\varepsilon|1\rangle$

$|0\rangle+\varepsilon|1\rangle$

time

1136

EP 4 224 378 A1

(a) Digital processing

(b) Analog processing

$$i\hbar \frac{d|\psi\rangle}{dt} = \mathcal{H}|\psi\rangle$$

$$\mathcal{H}(t) = \frac{\hbar}{2}\Omega(t)\sum_{j}\sigma_{j}^{x} - \hbar\delta(t)\sum_{j}n_{j} + \sum_{i\neq j}\frac{C_6}{r_{ij}^6}n_i n_j$$

**Fig. 12**

**multivariate sampling**

1302

1304

1306   $|\varnothing\rangle_1$

1308   $|\varnothing\rangle_2$

$\tilde{\mathcal{U}}^{\dagger}_{\tilde{\theta}_1}$

$\tilde{\mathcal{U}}^{\dagger}_{\tilde{\theta}_2}$

$\widehat{\mathcal{U}}_{\mathcal{T}}$

$\widehat{\mathcal{U}}_{\mathcal{T}}$

1310   $\sim X_1$

$\sim X_2$

fixed correlator   seprate variation

**Fig. 13**

Fig. 14

Fig. 15

EP 4 224 378 A1

## Fig. 16A

$$dX_t = -\nu(X_t - \mu)dt + \sigma dW_t,$$

$$\nu p(x, t_{\mathrm{s}}) + \nu(x - \mu)\frac{d}{dx}p(x, t_{\mathrm{s}}) + \frac{\sigma^2}{2}\frac{d^2}{dx^2}p(x, t_{\mathrm{s}}) = 0$$

## Fig. 16B

**Fig. 17**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANNIE E PAINE ET AL: "Quantum Quantile Mechanics: Solving Stochastic Differential Equations for Generating Time-Series", ARXIV.ORG, CORNELL UNIVERSITY LIBRARY, 201 OLIN LIBRARY CORNELL UNIVERSITY ITHACA, NY 14853, 3 October 2021 (2021-10-03), XP091069400, * the whole document * | 1-15 | INV. G06N10/60 G06N3/04 |
| A | OLEKSANDR KYRIIENKO ET AL: "Solving nonlinear differential equations with differentiable quantum circuits", ARXIV.ORG, CORNELL UNIVERSITY LIBRARY, 201 OLIN LIBRARY CORNELL UNIVERSITY ITHACA, NY 14853, 18 May 2021 (2021-05-18), XP081951791, DOI: 10.1103/PHYSREVA.103.052416 * the whole document * | 1-15 | |
| A | NIKLAS HEIM ET AL: "Quantum Model-Discovery", ARXIV.ORG, CORNELL UNIVERSITY LIBRARY, 201 OLIN LIBRARY CORNELL UNIVERSITY ITHACA, NY 14853, 11 November 2021 (2021-11-11), XP091096181, * the whole document * | 1-15 | TECHNICAL FIELDS SEARCHED (IPC) G06N |
| A | JIN-GUO LIU ET AL: "Differentiable Learning of Quantum Circuit Born Machine", ARXIV.ORG, CORNELL UNIVERSITY LIBRARY, 201 OLIN LIBRARY CORNELL UNIVERSITY ITHACA, NY 14853, 11 April 2018 (2018-04-11), XP081136738, DOI: 10.1103/PHYSREVA.98.062324 * the whole document * | 1-15 | |

-/--

The present search report has been drawn up for all claims

| Place of search | Date of completion of the search | Examiner |
|---|---|---|
| The Hague | 26 October 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**Europäisches Patentamt**
**European Patent Office**
**Office européen des brevets**

## EUROPEAN SEARCH REPORT

Application Number

EP 22 15 5513

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JINFENG ZENG ET AL: "Learning and Inference on Generative Adversarial Quantum Circuits", ARXIV.ORG, CORNELL UNIVERSITY LIBRARY, 201 OLIN LIBRARY CORNELL UNIVERSITY ITHACA, NY 14853, 10 August 2018 (2018-08-10), XP081505567, * the whole document * ----- | 1-15 | |
| T | Kyriienko Oleksandr ET AL: "Protocols for Trainable and Differentiable Quantum Gener- ative Modelling", , 15 February 2022 (2022-02-15), pages 1-17, XP055971913, Retrieved from the Internet: URL:https://arxiv.org/pdf/2202.08253.pdf [retrieved on 2022-10-17] ----- | | |

TECHNICAL FIELDS
SEARCHED       (IPC)

The present search report has been drawn up for all claims

| Place of search | Date of completion of the search | Examiner |
|---|---|---|
| The Hague | 26 October 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)